(19) Europäisches Patentamt
European Patent Office
Office européen des brevets

(11) Veröffentlichungsnummer: **0 407 341 B1**

(12) **EUROPÄISCHE PATENTSCHRIFT**

(45) Veröffentlichungstag der Patentschrift: **06.12.95**

(51) Int. Cl.$^{6}$: **A01N 25/32**, A01N 43/42, A01N 37/46

(21) Anmeldenummer: **90810478.9**

(22) Anmeldetag: **26.06.90**

Die Akte enthält technische Angaben, die nach dem Eingang der Anmeldung eingereicht wurden und die nicht in dieser Patentschrift enthalten sind.

# (54) Selektiv-herbizides Mittel.

(30) Priorität: **05.07.89 CH 2494/89**

(43) Veröffentlichungstag der Anmeldung:
**09.01.91 Patentblatt 91/02**

(45) Bekanntmachung des Hinweises auf die Patenterteilung:
**06.12.95 Patentblatt 95/49**

(84) Benannte Vertragsstaaten:
**DE ES FR GB IT**

(56) Entgegenhaltungen:
**EP-A- 0 159 290**
**EP-A- 0 236 268**
**GB-A- 1 437 711**
**GB-A- 1 563 201**

**Biochemistry and Physiology of Herbicide Action, S. 177 - 183, Carl Fedtke, Springer Verlag, Berlin, 1982.**

**A.R. Rendina et al., Arch. Biochem. Biophys., Vol. 265, 219 - 225 (1988).**

**K. Kobek et al., Z. Naturforsch., 43c, 47 - 54 (1988).**

(73) Patentinhaber: **CIBA-GEIGY AG**
**Klybeckstrasse 141**
**CH-4002 Basel (CH)**

(72) Erfinder: **Seiler, Alfred, Dr.**
**Schaffhauserstrasse 51**
**CH-4332 Stein (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft ein selektiv-herbizides Mittel zur Bekämpfung von Gräsern und Unkräutern in Kulturen von Nutzpflanzen, insbesondere Getreide, welches aus einem Herbizid und einem Gegenmittel welches die Nutzpflanzen, nicht aber die Unkräuter vor der phytotoxischen Wirkung des Herbizides bewahrt, sowie die Verwendung dieses Mittels oder der Kombination Herbizid und Gegenmittel zur Unkrautbekämpfung in Nutzpflanzenkulturen.

Beim Einsatz von Herbiziden können in Abhängigkeit von Faktoren wie beispielsweise Dosis des Herbizids und Applikationsart, Art der Kulturpflanze, Bodenbeschaffenheit und klimatischen Bedingungen, wie beispielsweise Belichtungsdauer, Temperatur und Niederschlagsmengen, die Kulturpflanzen in erheblichem Masse geschädigt werden. Insbesondere kann es zu starken Schädigungen kommen, wenn im Rahmen der Fruchtfolge nach Kulturpflanzen, die gegen die Herbizide resistent sind, andere Kulturpflanzen angebaut werden, welche keine oder nur unzureichende Resistenz gegenüber den Herbiziden aufweisen.

Es wurde nun gefunden, dass überraschenderweise ein Schutz von Kulturpflanzen gegen Schäden, welche durch die obenerwähnten Herbizide verursacht werden, durch Behandlung der Kulturpflanzen, von Teilen dieser Pflanzen oder von für den Anbau der Kulturpflanzen bestimmten Böden mit einem Gegenmittel erzielt werden kann. Die herbizide Wirkung gegenüber Unkräutern und Ungräsern wird durch dieses Gegenmittel nicht aufgehoben.

Das selektiv-herbizide Mittel ist dadurch gekennzeichnet, dass es neben inerten Zutaten wie Trägerstoffen, Lösungsmittel und Netzmitteln als wirksame Komponente eine Mischung enthält, die

a) aus einer herbizid wirksamen Menge eines N-Benzoyl-N-phenylalaninderivat der Formel I

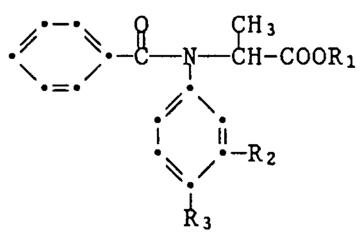

(I)

worin

$R_1$ Wasserstoff oder $C_1$-$C_4$-Alkyl und

$R_2$ und $R_3$ unabhängig voneinander je Chlor oder Fluor bedeuten, oder deren Enantiomeren, und

b) als Gegenmittel, einer herbizid-antagonistisch wirksamen Menge eines Chinolinderivates der Formel II

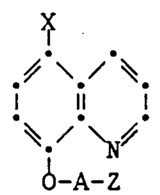

II

worin X Wasserstoff oder ein Halogen

A eine der Gruppen $-CH_2-$, $-CH_2-CH_2-$ oder $-CH(CH_3)-$ und

Z Cyan oder Amidoxim, welches am Sauerstoffatom acyliert sein kann, eine Carboxylgruppe oder ein Salz davon, eine Mercaptocarbonylgruppe oder ein Salz davon, eine Carbonsäureestergruppe, eine Carbonsäurethiolestergruppe,eine unsubstituierte oder substituierte Carbonsäureamidgruppe, ein cyclisiertes, unsubstituiertes oder substituiertes Derivat einer Carbonsäureamidgruppe oder eine Carbonsäurehydrazidgruppe, oder

A und Z zusammen einen unsubstituierten oder substituierten Tetrahydrofuran-2-on-Ring

bedeuten, unter Einschluss ihrer Säureadditionssalze und Metallkomplexe, besteht.

Die Verbindungen der Formel I sind bekannt und z.B. im UK Patent 1 437 711 und 1 563 201 beschrieben.

Unter den Herbiziden der Formel I sind vor allem

N-Benzoyl-N-(3-chlor-4-fluorphenyl)-DL-alanin,

N-Benzoyl-N-(3-chlor-4-fluorphenyl)-DL-alaninsäure-methylester,

N-Benzoyl-N-(3-chlor-4-fluorphenyl)-DL-alaninsäure-ethylester,
N-Benzoyl-N-(3-chlor-4-fluorphenyl)-D-alanin,
N-Benzoyl-N-(3-chlor-4-fluorphenyl)-D-alaninsäure-methylester,
N-Benzoyl-N-(3-chlor-4-fluorphenyl)-D-alaninsäure-isopropylester,
N-Benzoyl-N-(3-chlor-4-fluorphenyl)-L-alanin,
N-Benzoyl-N-(3-chlor-4-fluorphenyl)-L-alaninsäure-methylester,
für den Einsatz zur selektiven Unkrautbekämpfung geeignet.

Sie werden in an sich bekannter Weise hergestellt, indem man 3-Chlor-4-fluoranilin zuerst mit einem 2-Brompropionsäurederivat und das entstandene 3-Chlor-4-fluorphenylalaninsäurederivat anschliessend mit Benzoesäurechlorid umsetzt.

Die Verbindungen der Formel II sind aus den publizierten europäischen Patentanmeldungen EP-A 86 750, EP-A 94 349 und EP 159290 bekannt und lassen sich nach den in diesen Publikationen beschriebenen Methoden herstellen. In der Definition von Z der Chinolinderivate der Formel II ist unter Amidoxim die Gruppe $-C(NH_2)=N-OH$ zu verstehen. Das Amidoxim kann am Sauerstoffatom acyliert sein. Als am Sauerstoffatom acylierte Amidoxime kommen solche der Formel $-C(NH_2)=N-O-CO-E$ in Betracht, in denen E für $-R^7$, $-OR^8$, $-SR^9$ oder $-NR^{10}R^{11}$ steht, wobei

$R^7$ $C_1$-$C_7$-Alkyl, welches unsubstituiert oder durch Halogen oder $C_1$-$C_4$-Alkoxy substituiert ist, $C_3$-$C_6$-Cycloalkyl, $C_2$-$C_4$-Alkenyl, Phenyl, welches unsubstituiert oder durch Halogen, Nitro oder $C_1$-$C_3$-Alkyl substituiert ist, Benzyl, welches unsubstituiert oder durch Halogen, Nitro oder $C_1$-$C_3$-Alkyl substituiert ist, oder einen 5- bis 6-gliedrigen heterocyclischen Ring, welcher ein oder zwei Heteroatome aus der Gruppe N, O oder S enthält und unsubstituiert oder durch Halogen substituiert ist,

$R^8$, $R^9$ und $R^{10}$ unabhängig voneinander $C_1$-$C_8$-Alkyl, welches unsubstituiert oder durch Halogen substituiert ist, $C_2$-$C_4$-Alkenyl, $C_3$-$C_6$-Alkinyl, Phenyl, welches unsubstituiert oder durch Halogen, $C_1$-$C_3$-Alkyl, $C_1$-$C_3$-Alkoxy, Trifluormethyl oder Nitro substituiert ist, oder Benzyl, welches unsubstituiert oder durch Halogen oder Nitro substituiert ist,

$R^{11}$ Wasserstoff, $C_1$-$C_8$-Alkyl oder $C_1$-$C_3$-Alkoxy, oder

$R^{10}$ und $R^{11}$ gemeinsam mit dem Stickstoffatom, an das sie gebunden sind, einen 5- bis 6-gliedrigen Heterocyclus, welcher noch ein weiteres Heteroatom aus der Gruppe N, O und S enthalten kann, bedeuten.

Bei $R^7$ als Heterocyclus kann es sich um gesättigte, teilgesättigte oder ungesättigte Heterocyclen handeln, wie beispielsweise Thiophen, Furan, Tetrahydrofuran und Pyrimidin.

Als Heterocyclen, welche von $R^{10}$ und $R^{11}$ gemeinsam mit dem Stickstoffatom, an das sie gebunden sind, gebildet werden, kommen gesättigte, teilgesättigte oder ungesättigte Heterocyclen in Betracht. Beispiele für solche Heterocyclen sind Pyrrolidin, Pyrrolin, Pyrrol, Imidazolidin, Imidazolin, Imidazol, Piperazin, Pyridin, Pyrimidin, Pyrazin, Thiazin, Oxazol, Thiazol und insbesondere Piperidin und Morpholin.

Unter Alkyl als Bestandteil des acylierten Amidoxims Z kommen im Rahmen der jeweils angegebenen Anzahl von Kohlenstoffatomen alle geradkettigen und alle verzweigten Alkylgruppen in Betracht.

In der Bedeutung von $R^7$ steht $C_3$-$C_6$-Cycloalkyl für Cyclopropyl, Cyclobutyl, Cyclopentyl und Cyclohexyl.

Von den $C_2$-$C_4$-Alkenyl- und $C_3$-$C_6$-Alkinylgruppen als Bestandteile des acylierten Amidoxims Z sind vor allem Vinyl, Allyl, 1-Propenyl, Methallyl und Propargyl zu erwähnen.

Für Z als Carbonsäureestergruppe oder Carbonsäurethiolestergruppe kommt ein entsprechender Säurerest in Betracht, der beispielsweise durch einen gegebenenfalls substituierten, aliphatischen Rest oder einen gegebenenfalls über einen aliphatischen Rest gebundenen und gegebenenfalls substituierten cycloaliphatischen, aromatischen oder heterocyclischen Rest verestert ist.

Als Carbonsäureesterrest bevorzugt ist der Rest $-COOR^{12}$ und als Carbonsäurethiolesterrest bevorzugt ist der Rest $-COSR^{13}$, wobei $R^{12}$ und $R^{13}$ die nachfolgend angegebenen Bedeutungen haben: gegebenenfalls substituierter Alkyl-, Alkenyl-, Alkinyl-, Cycloalkyl-, Phenyl- oder Naphthylrest oder gegebenenfalls substituierter heterocyclischer Rest. Die Reste $-COOR^{12}$ und $-COSR^{13}$ schliessen auch die freien Säuren ein, wobei $R^{12}$ und $R^{13}$ für Wasserstoff stehen, sowie die Salze davon, wobei $R^{12}$ und $R^{13}$ für ein Kation stehen. Als Salzbildner eignen sich hier besonders Metalle und organische Stickstoffbasen, vor allem quaternäre Ammoniumbasen. Hierbei kommen als zur Salzbildung geeignete Metalle Erdalkalimetalle, wie Magnesium oder Calcium, vor allem aber die Alkalimetalle in Betracht, wie Lithium und insbesondere Kalium und Natrium. Ferner sind als Salzbildner auch Uebergangsmetalle wie beispielsweise Eisen, Nickel, Kobalt, Kupfer, Zink, Chrom oder Mangan geeignet. Beispiele für zur Salzbildung geeignete Stickstoffbasen sind primäre, sekundäre oder tertiäre, aliphatische und aromatische, gegebenenfalls am Kohlenwasserstoffrest hydroxylierte Amine, wie Methylamin, Aethylamin, Propylamin, Isopropylamin, die vier isomeren Butylamine, Dimethylamin, Diäthylamin, Dipropylamin, Diisopropylamin, Di-n-butylamin, Pyrrolidin, Piperidin, Morpholin, Trimethylamin, Triäthylamin, Tripropylamin, Chinuclidin, Pyridin, Chinolin, Isochinolin sowie

Methanolamin, Aethanolamin, Propanolamin, Dimethanolamin, Diäthanolamin oder Triäthanolamin. Als organische Stickstoffbasen kommen auch quaternäre Ammoniumbasen in Betracht. Beispiele für quaternäre Ammoniumbasen sind Tetraalkylammoniumkationen, in den die Alkylreste unabhängig voneinander geradkettige oder verzweigte $C_1$-$C_6$-Alkylgruppen sind, wie das Tetramethylammoniumkation, das Tetraäthylammoniumkation oder das Trimethyläthylammoniumkation, sowie weiterhin das Trimethylbenzylammoniumkation, das Triäthylbenzylammoniumkation und das Trimethyl-2-hydroxyäthylammoniumkation. Besonders bevorzugt als Salzbildner sind das Ammoniumkation und Trialkylammoniumkationen, in denen die Alkylreste unabhängig voneinander geradkettige oder verzweigte, gegebenenfalls durch eine Hydroxylgruppe substituierte $C_1$-$C_6$-Alkylgruppen, insbesondere $C_1$-$C_2$-Alkylgruppen, sind, wie beispielsweise das Trimethylammoniumkation, das Triäthylammoniumkation und das Tri-(2-hydroxyäthylen)-ammoniumkation.

Für Z als Carbonsäureamidgruppe kommt ein entsprechender Amidrest in Betracht, welcher unsubstituiert oder am Stickstoffatom mono- oder disubstituiert sein kann oder in welchem das Stickstoffatom Bestandteil eines gegebenenfalls substituierten heterocyclischen Restes ist. Als Substituenten der Amidgruppe sind beispielsweise ein gegebenenfalls substituierter und gegebenenfalls über ein Sauerstoffatom gebundener aliphatischer Rest, ein gegebenenfalls über einen aliphatischen Rest gebundener und gegebenenfalls substituierter cycloaliphatischer, aromatischer oder heterocyclischer Rest oder eine gegebenenfalls mono- oder disubstituierte Aminogruppe zu nennen.

Als Carbonsäureamidrest bevorzugt ist der Rest -$CONR^{14}R^{15}$, worin $R^{14}$ für Wasserstoff, einen gegebenenfalls substituierten Alkyl-, Alkenyl-, Alkinyl- Cycloalkyl-, Phenyl- oder Naphthylrest, einen gegebenenfalls substituierten heterocyclischen Rest oder einen Alkoxyrest, $R^{15}$ für Wasserstoff, Amino, mono- oder disubstituiertes Amino oder einen gegebenenfalls substituierten Alkyl-, Alkenyl-, Cycloalkyl- oder Phenylrest oder $R^{14}$ und $R^{15}$ gemeinsam mit dem Stickstoffatom, an das sie gebunden sind, für einen gegebenenfalls substituierten heterocyclischen Rest stehen.

Als Substituenten der organischen Reste $R^{12}$, $R^{13}$, $R^{14}$ und $R^{15}$ kommen beispielsweise Halogen, Nitro, Cyan, Hydroxy, Alkyl, Halogenalkyl, Alkoxy, welches durch ein oder mehrere Sauerstoffatome unterbrochen sein kann, Alkylthio, Halogenalkoxy, Hydroxyalkoxy, welches durch ein oder mehrere Sauerstoffatome unterbrochen sein kann, Hydroxyalkylthio, Alkoxycarbonyl, Amino, Alkylamino, Dialkylamino, Hydroxyalkylamino, Di-(hydroxyalkyl)-amino, Aminoalkylamino, Cycloalkyl, gegebenenfalls substituiertes Phenyl, gegebenenfalls substituiertes Phenoxy oder ein gegebenenfalls substituierter heterocyclischer Rest in Betracht.

Unter heterocyclischen Resten als Bestandteile des Carbonsäureesterrestes, des Carbonsäurethiolesterrestes und des Carbonsäureamidrestes sind vorzugsweise 5- bis 6-gliedrige, gesättigte oder ungesättigte, gegebenenfalls substituierte monocyclische Heterocyclen mit 1 bis 3 Heteroatomen aus der Gruppe N, O und S zu verstehen, wie beispielsweise Furan, Tetrahydrofuran, Tetrahydropyran, Tetrahydropyrimidin, Pyridin, Piperidin, Morpholin und Imidazol.

Unter Cycloalkylresten als Bestandteile des Carbonsäureesterrestes, des Carbonsäurethiolesterrestes und des Carbonsäureamidrestes sind insbesondere solche mit 3 bis 8, vor allem 3 bis 6, Kohlenstoffatomen, zu verstehen,

Im Substituenten Z als Bestandteil des Carbonsäureesterrestes, des Carbonsäurethiolesterrestes und des Carbonsäureamidrestes vorliegende aliphatische, acyclische Reste können geradkettig oder verzweigt sein und enthalten zweckmässigerweise bis maximal 18 Kohlenstoffatome. Eine geringere Anzahl von Kohlenstoffatomen ist häufig, insbesondere bei zusammengesetzten Substituenten, von Vorteil.

Für Z als cyclisiertes Derivat einer Carbonsäureamidgruppe kommt insbesondere ein gegebenenfalls substituierter Oxazolin-2-yl-Rest, vorzugsweise ein unsubstituierter Oxazolin-2-yl-Rest, in Betracht.

A und Z können zusammen einen gegebenenfalls substituierten Tetrahydrofuran-2-on-Ring bilden, wobei der unsubstituierte Tetrahydrofuran-2-on-Ring bevorzugt ist, insbesondere der unsubstituierte Tetrahydrofuran-2-on-3-yl-Ring.

In den Verbindungen der Formel II bedeutet Halogen Fluor, Chlor, Brom und Jod, insbesondere Chlor, Brom und Jod.

Als Salzbildner für Säureadditionssalze kommen organische und anorganische Säuren in Betracht. Beispiele organischer Säuren sind Essigsäure, Trichloressigsäure, Oxalsäure, Benzolsulfonsäure und Methansulfonsäure. Beispiele anorganischer Säuren sind Chlorwasserstoffsäure, Bromwasserstoffsäure, Jodwasserstoffsäure, Schwefelsäure, Phosphorsäure, phosphorige Säure und Salpetersäure.

Als Metallkomplexbildner eignen sich beispielsweise Elemente der 3. und 4. Hauptgruppe, wie Aluminium und Zinn, sowie der 1. bis 8. Nebengruppe, wie beispielsweise Mangan, Eisen, Nickel, Zink, Kupfer und Silber. Bevorzugt sind die Nebengruppenelemente der 4. Periode.

Wenn in den Verbindungen der Formel II A für -$CH(CH_3)$- steht, der Rest Z ein asymmetrisches Kohlenstoffatom enthält oder A und Z zusammen einen Tetrahydrofuran-2-on-Ring bilden, existieren optisch

isomere Verbindungen. Im Rahmen der vorliegenden Erfindung sind unter den entsprechenden Verbindungen der Formel II sowohl die optisch reinen Isomere wie auch die Isomerengemische zu verstehen. Ist bei Vorhandensein eines oder mehrerer asymmetrischer Kohlenstoffatome die Struktur nicht näher angegeben, so ist stets das Isomerengemisch gemeint.

Besonders geeignet zur erfindungsgemässen Verwendung sind Verbindungen der nachfolgenden Tabelle 1.

Tabelle 1:

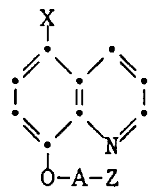

| Nr. | X | A | Z | physikal. Konstante |
|---|---|---|---|---|
| 1.1 | H | $-CH_2-$ | -CN | Smp. 118-119°C |
| 1.2 | H | $-CH_2-$ | 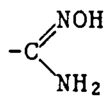 | Smp. 201-204°C (Zers.) |
| 1.3 | H | $-CH_2-$ | -CN | Smp. 114-116°C |
| 1.4 | H | $-CH_2-$ | 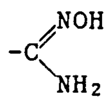 | Smp. 209-210°C (Zers.) |
| 1.5 | Cl | $-CH_2-$ | 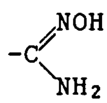 | Smp. 203-205°C (Zers.) |
| 1.6 | H | $-CH_2-$ | 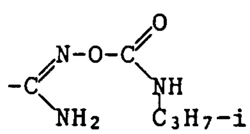 | Smp. 136-138°C |
| 1.7 | Cl | $-CH_2-$ | -CN | Smp. 159-160°C |
| 1.8 | H | $-CH_2-$ | 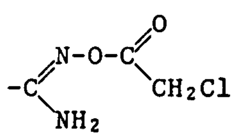 | Smp. 129-130°C |
| 1.9 | H | $-CH_2-$ | 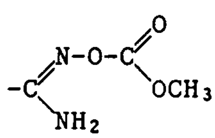 | Smp. 143-145°C |
| 1.10 | H | 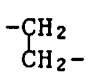 | -CN | Smp. 108-112°C |
| 1.11 | H | 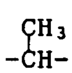 | -CN | Smp. 121-124°C |
| 1.12 | H | 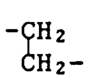 | 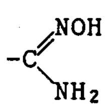 | Smp. 186-189°C |

Tabelle 1 (Fortsetzung)

| Nr. | X | A | Z | physikal. Konstante |
|---|---|---|---|---|
| 1.13 | Cl | 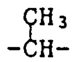 | -CN | Smp. 143-145° |
| 1.14 | H | 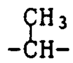 | 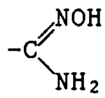 | Smp. 191-194°C (Zers.) |
| 1.15 | Cl | 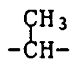 | 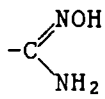 | Smp. 186-189°C (Zers.) |
| 1.16 | H | $-CH_2-$ | 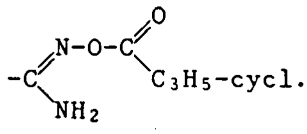 | Smp. 165-166°C |
| 1.17 | H | $-CH_2-$ | 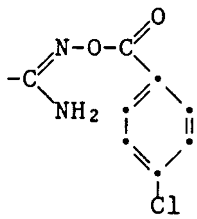 | Smp. 139-141°C |
| 1.18 | Cl | $-CH_2-$ | 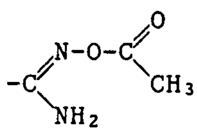 | Smp. 141-143°C |
| 1.19 | Cl | $-CH_2-$ | 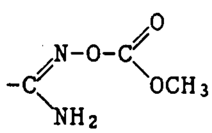 | Smp. 148-149°C |
| 1.20 | Cl | $-CH_2-$ | 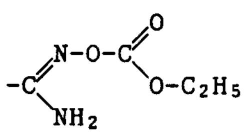 | Smp. 139-140°C |
| 1.21 | H | $-CH_2-$ | 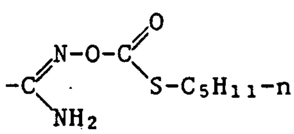 | Smp. 111-114°C |
| 1.22 | H | $-CH_2-$ | 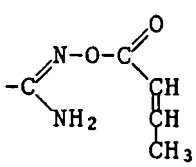 | Smp. 158-162°C |

Tabelle 1 (Fortsetzung)

| Nr. | X | A | Z | physikal. Konstante |
|---|---|---|---|---|
| 1.23 | H | $-CH_2-$ | 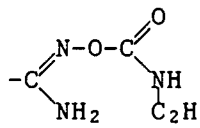 | Smp. 123-125°C |
| 1.24 | H | $-CH_2-$ | 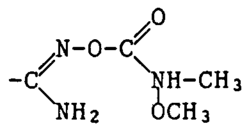 | Smp. 138-139°C |
| 1.25 | H | $-CH_2-$ | 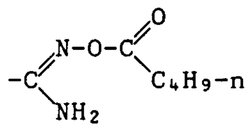 | Smp. 120-122°C |
| 1.26 | Cl | $-CH_2-$ | 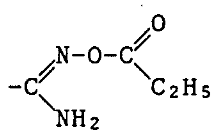 | Smp. 157-158°C (Zers.) |
| 1.27 | H | $-CH_2-$ | 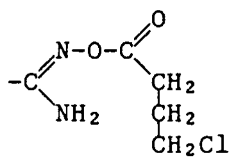 | Smp. 144-146°C |
| 1.28 | H | $-CH_2-$ | 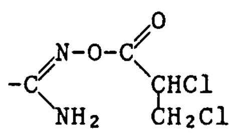 | Smp. 112-114°C |
| 1.29 | Cl | $-CH_2-$ | 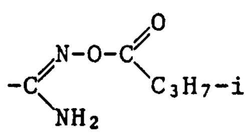 | Smp. 173-174°C |
| 1.30 | H | $-CH_2-$ | 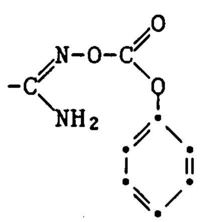 | Smp. 155-156°C |
| 1.31 | H | $-CH_2-$ | 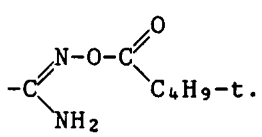 | Smp. 107-110,5°C |

Tabelle 1 (Fortsetzung)

| Nr. | X | A | Z | physikal. Konstante |
|---|---|---|---|---|
| 1.32 | H | $-CH_2-$ | 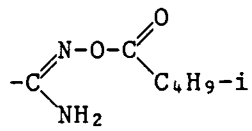 | Smp. 124-126°C |
| 1.33 | H | $-CH_2-$ | 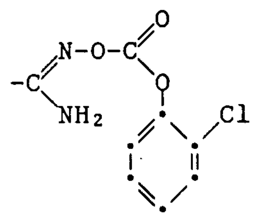 | Smp. 131-132°C |
| 1.34 | H | $-CH_2-$ | 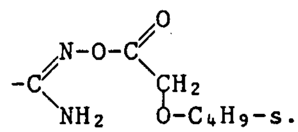 | Smp. 84-86°C |
| 1.35 | H | $-CH_2-$ | 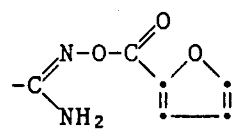 | Smp. 168-169°C |
| 1.36 | H | $-CH_2-$ | 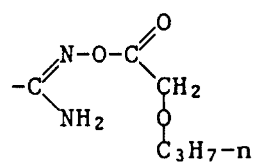 | Smp. 101-103°C |
| 1.37 | Cl | $-CH_2-$ | 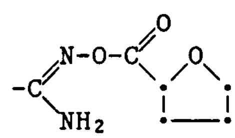 | Smp. 156-157°C (Zers.) |
| 1.38 | H | $-CH_2-$ | 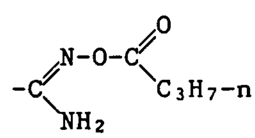 | Smp. 82-85°C |
| 1.39 | H | $-CH_2-$ | 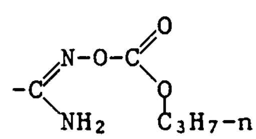 | Smp. 144-147°C |
| 1.40 | H | $-CH_2-$ | 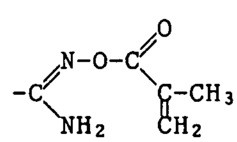 | Smp. 128-130°C |

Tabelle 1 (Fortsetzung)

| Nr. | X | A | Z | physikal. Konstante |
|---|---|---|---|---|
| 1.41 | H | $-CH_2-$ | 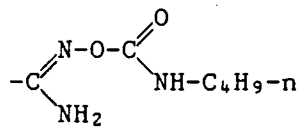 | Smp. 104-107°C |
| 1.42 | H | $-CH_2-$ | 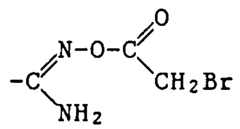 | Smp. 132-134°C |
| 1.43 | H | $-CH_2-$ | 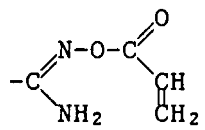 | Smp. 138-140°C |
| 1.44 | H | $-CH_2-$ | 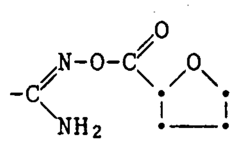 | Smp. 129-131°C |
| 1.45 | H | $-CH_2-$ | 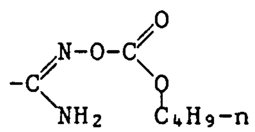 | Smp. 121-123°C |
| 1.46 | H | $-CH_2-$ | 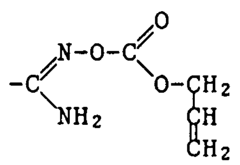 | Smp. 123-125°C |
| 1.47 | H | $-CH_2-$ | 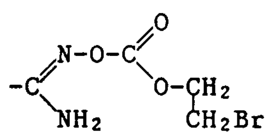 | Smp.127-128°C (Zers.) |
| 1.48 | Cl | $-CH_2-$ | 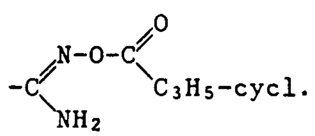 | Smp.173-175°C |
| 1.49 | H | $-CH_2-$ | 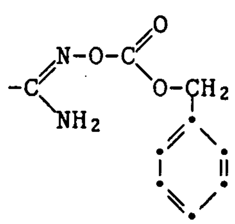 | Smp.135-137°C |

Tabelle 1 (Fortsetzung)

| Nr. | X | A | Z | physikal. Konstante |
|---|---|---|---|---|
| 1.50 | Cl | $-CH_2-$ | 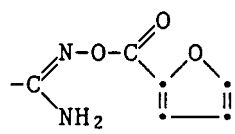 | Smp.191-192°C (Zers.) |
| 1.51 | H | $-CH_2-$ | 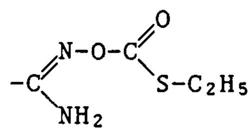 | Smp. 120-121°C |
| 1.52 | H | $-CH_2-$ | 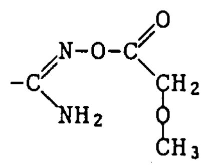 | Smp. 118-120°C |
| 1.53 | Cl | $-CH_2-$ | 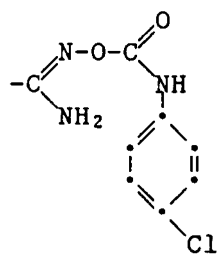 | Smp. 191-192°C (Zers.) |
| 1.54 | H | $-CH_2-$ | 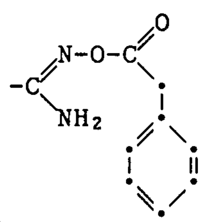 | Smp. 158-159°C |
| 1.55 | H | $-CH_2-$ | 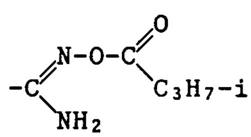 | Smp. 115-117,5°C |
| 1.56 | H | $-CH_2-$ | 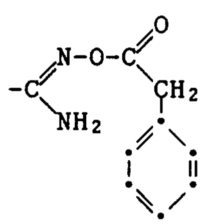 | Smp. 140-142°C |

Tabelle 1 (Fortsetzung)

| Nr. | X | A | Z | physikal. Konstante |
|---|---|---|---|---|
| 1.57 | H | $-CH_2-$ | 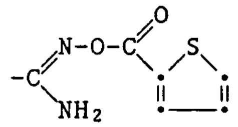 | Smp. 164-165°C |
| 1.58 | H | $-CH_2-$ | 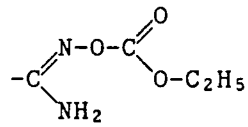 | Smp. 129-132°C |
| 1.59 | H | $-CH_2-$ | 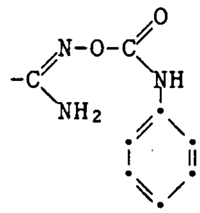 | Smp. 155-157,5°C |
| 1.60 | H | $-CH_2-$ | 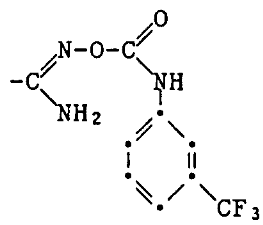 | Smp. 158-160°C |
| 1.61 | Cl | $-CH_2-$ | 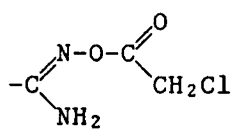 | Smp. 155-158°C (Zers.) |
| 1.62 | H | $-CH_2-$ | 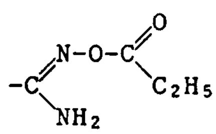 | Smp. 144-146°C |
| 1.63 | H | $-CH_2-$ | 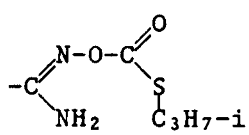 | Smp. 123-124°C |
| 1.64 | H | $-CH_2-$ | 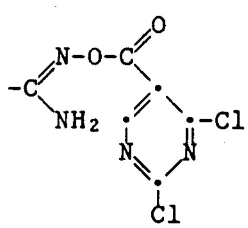 | Smp. 173-176°C (Zers.) |

Tabelle 1 (Fortsetzung)

| Nr. | X | A | Z | physikal. Konstante |
|---|---|---|---|---|
| 1.65 | H | $-CH_2-$ | 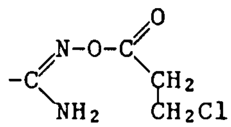 | Smp. 134-136°C (Zers.) |
| 1.66 | H | $-CH_2-$ | 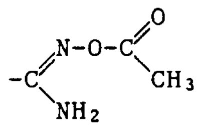 | Smp. 100-102°C |
| 1.67 | H | $-CH_2-$ | 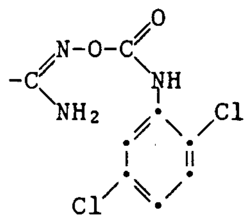 | Smp. 197-199°C |
| 1.68 | H | $-CH_2-$ | 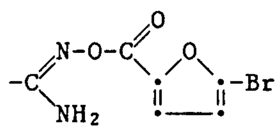 | Smp. 170-171°C |
| 1.69 | H | $-CH-$<br>$CH_3$ | $-COOCH_3$ | Smp. 70-72°C |
| 1.70 | H | $-CH_2-$ | $-COOH \cdot H_2O$ | Smp. 184-185°C |
| 1.71 | H | $-CH_2-$ | $-COOCH_2CH_2OCH_3$ | Smp. 80-82°C |
| 1.72 | H | $-CH_2-$ | $-COOCH_3$ | Smp. 46,5-67,0°C |
| 1.73 | H | $-CH_2-$ | $-COOC_2H_5 \cdot H_2O$ | Smp. 56-59°C |
| 1.74 | H | $-CH-$<br>$CH_3$ | $-CONH(CH_2)_3OC_2H_5$ | Smp. 54-56°C |
| 1.75 | H | $-CH-$<br>$CH_3$ | $-CONHC_2H_5$ | Smp. 86-88°C |
| 1.76 | H | $-CH_2-$ | $-COOC_3H_7$-n | Smp. 28-31°C |
| 1.77 | H | $-CH_2-$ | $-COOC_3H_7$-i | $n_D^{23} = 1.5696$ |
| 1.78 | H | $-CH_2-$ | $-CONHCH_3 \cdot H_2O$ | Smp. 74-81°C |
| 1.79 | H | $-CH_2-$ | $CH_3$<br>$-CON$<br>$CH_3$ | Smp. 142-145°C |
| 1.80 | H | $-CH_2-$ | $-CONHC_2H_5$ | $n_D^{22,5} = 1.6002$ |

Tabelle 1 (Fortsetzung)

| Nr. | X | A | Z | physikal. Konstante |
|---|---|---|---|---|
| 1.81 | H | $-CH(CH_3)-$ | $-CONH(CH_2)_3OH$ | Smp. 120-122°C |
| 1.82 | H | $-CH_2-$ | $-COOCH_2CH_2OC_2H_5$ | $n_D^{24}$ = 1.5673 |
| 1.83 | H | $-CH(CH_3)-$ | $-CONHCH_2-$ 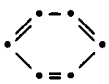 | Smp. 88-90°C |
| 1.84 | H | $-CH_2-$ | $-CONH(CH_2)_3CH_3$ | Smp. 66-68°C |
| 1.85 | H | $-CH(CH_3)-$ | $-CON(CH_3)CH_2CH_2OH$ | $n_D^{22}$ = 1.6054 |
| 1.86 | H | $-CH_2-$ | $-CON(CH_3)CH_2CH_2OH$ | Smp. 146-149°C |
| 1.87 | H | $-CH_2-$ | $-COOCH_2-$ 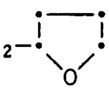 | zähe Masse |
| 1.88 | H | $-CH(CH_3)-$ | $-CONH(CH_2)_3CH_3 \cdot H_2O$ | Smp. 73-76°C |
| 1.89 | H | $-CH(CH_3)-$ | -CO- 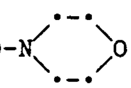 | Smp. 120-121°C |
| 1.90 | H | $-CH(CH_3)-$ | $-CON(CH_3)CH_3$ | Smp. 105-111°C |
| 1.91 | Cl | $-CH_2-$ | $-COOH$ | Smp. 232-233°C |
| 1.92 | Cl | $-CH_2-$ | $-COOCH_2CH_2OCH_3$ | Smp. 97-98°C |
| 1.93 | Cl | $-CH_2-$ | $-COOCH_3$ | Smp. 104-105,5°C |
| 1.94 | Cl | $-CH_2-$ | $-COOC_2H_5$ | Smp. 116-117°C |
| 1.95 | Cl | $-CH_2-$ | $-COOC_3H_7-n$ | Smp. 108-109°C |
| 1.96 | Cl | $-CH_2-$ | $-CON(CH_3)CH_3$ | Smp. 135-136°C |
| 1.97 | Cl | $-CH_2-$ | $-COOC_4H_9-t$ | Smp. 63-69°C |
| 1.98 | H | $-CH_2-$ | $-COOC_4H_9-t$ | Smp. 68-70°C |

Tabelle 1 (Fortsetzung)

| Nr. | X | A | Z | physikal. Konstante |
|---|---|---|---|---|
| 1.99 | Cl | $-CH_2-$ | $-COOCH_2-C\equiv CH$ | Smp. 115-116°C |
| 1.100 | Cl | $-CH_2-$ | $-COOC_3H_7-i$ | Smp. 147-148°C |
| 1.101 | Cl | $-CH_2-$ | $-COOCH_2CH_2OC_2H_5$ | Smp. 102-104°C |
| 1.102 | Cl | $-CH_2-$ | $-COOCH_2-$ 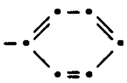 | Smp. 110-112°C |
| 1.103 | Cl | $-CH_2-$ | $-COOCH_2-CH=CH_2$ | Smp. 98-99°C |
| 1.104 | Cl | $-CH_2-$ | $-COO(CH_2)_{11}CH_3$ | Smp. 76-77°C |
| 1.105 | Cl | $-CH_2-$ | $-COOC_4H_9-s$ | Smp. 110-111°C |
| 1.106 | H | $-CH_2-$ | $-COO(CH_2)_7CH_3$ | $n_D^{24}$ = 1.5419 |
| 1.107 | Cl | $-CH_2-$ | $-COOC_4H_9n$ | Smp. 90,5-92°C |
| 1.108 | H | $-CH_2-$ | $-COO(CH_2)_{11}CH_3$ | $n_D^{23}$ = 1.5232 |
| 1.109 | H | $-CH_2-$ | $-COOCH_2-CH=CH_2$ | $n_D^{23}$ = 1.5885 |
| 1.110 | Cl | $-CH_2-$ | $-COO(CH_2)_7CH_3$ | Smp. 87-88°C |
| 1.111 | H | $-CH_2-$ | $-COOC_4H_9-n$ | $n_D^{22}$ = 1.5642 |
| 1.112 | H | $-CH_2-$ | $-COOC_4H_9-s$ | rotes Oel |
| 1.113 | Cl | $-CH_2-$ | $-COOCH_2CH_2Cl$ | Smp. 125-126°C |
| 1.114 | H | $-CH_2-$ | $-COOCH_2-$ 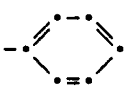 | $n_D^{23,5}$ = 1.6099 |
| 1.115 | Cl | $-CH_2-$ | $-COOCH_2-$ 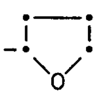 | Smp. 101-103°C |
| 1.116 | Cl | $-CH_2-$ | $-COS(CH_2)_7CH_3$ | Smp. 53-54°C |
| 1.117 | H | $-CH_2-$ | $-COOCH_2CH_2Cl$ | Smp. 109-110°C |
| 1.118 | H | $-CH_2-$ | $-COOC_4H_9-i$ | $n_D^{22}$ = 1.5632 |
| 1.119 | H | $-CH_2-$ | $-COOCHCH_2CH_2CH_3$<br>$CH_3$ | $n_D^{22}$ = 1.5391 |

Tabelle 1 (Fortsetzung)

| Nr. | X | A | Z | physikal. Konstante |
|---|---|---|---|---|
| 1.120 | H | $-CH_2-$ | 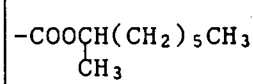 | $n_D^{22}$ = 1.5342 |
| 1.121 | H | $-CH_2-$ | $-CONH(CH_2)_{11}CH_3$ | Smp. 56-61°C |
| 1.122 | H | $-CH_2-$ | 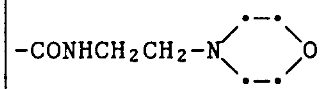 | Smp. 94-99°C |
| 1.123 | H | $-CH_2-$ | $-CONHCH_2CH_2CH_2OH$ | Smp. 138-139°C |
| 1.124 | H | $-CH_2-$ | 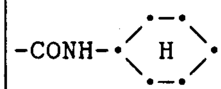 | Smp. 104-106°C |
| 1.125 | H | $-CH_2-$ | 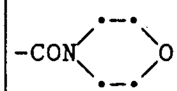 | Smp. 99-103°C |
| 1.126 | H | $-CH_2-$ | 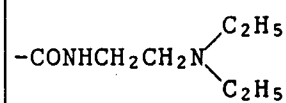 | $n_D^{23}$ = 1.5686 |
| 1.127 | H | $-CH_2-$ | 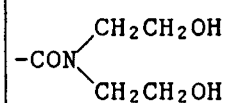 | Smp. 144-146°C |
| 1.128 | H | $-CH_2-$ | 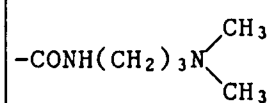 | $n_D^{23}$ = 1.5766 |
| 1.129 | H | $-CH_2-$ | 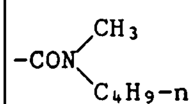 | $n_D^{22}$ = 1.5840 |
| 1.130 | H | $-CH_2-$ | 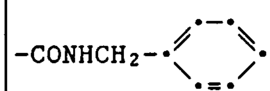 • $H_2O$ | Smp. 70,5-73,5°C |
| 1.131 | H | $-CH_2-$ | 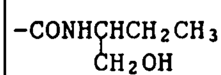 | Smp. 150-151°C |
| 1.132 | H | $-CH_2-$ | 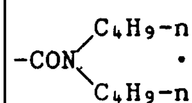 • $2H_2O$ | Smp. 105-106°C |
| 1.133 | H | $-CH_2-$ | 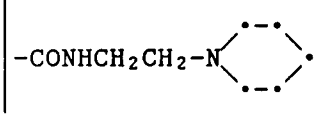 | $n_D^{26}$ = 1.5821 |

Tabelle 1 (Fortsetzung)

| Nr. | X | A | Z | physikal. Konstante |
|---|---|---|---|---|
| 1.134 | H | $-CH_2-$ | 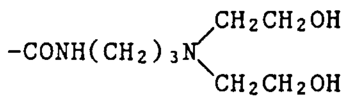 | Smp. 109-110°C |
| 1.135 | H | $-CH_2-$ | $-CONHCH_2-CH=CH_2 \cdot H_2O$ | Smp. 71-75°C |
| 1.136 | H | $-CH_2-$ | $-CONHCH_2-$ 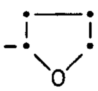 $\cdot H_2O$ | Smp. 57-58°C |
| 1.137 | H | $-CH_2-$ | $-CONH(CH_2)_3OC_2H_5$ | Smp. 51-61°C |
| 1.138 | H | $-CH_2-$ | $-CONHCH_2CH_2NHCH_2CH_2OH$ | Smp. 70-91°C |
| 1.139 | Cl | $-CH_2-$ | $CONH(CH_2)_3OC_2H_5$ | Smp. 85-88°C |
| 1.140 | Cl | $-CH_2-$ | 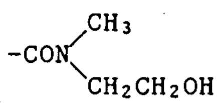 | Smp. 187-189°C |
| 1.141 | Cl | $-CH_2-$ | 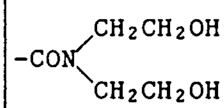 | Smp. 177-179°C |
| 1.142 | Cl | $-CH_2-$ | 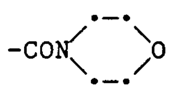 | Smp. 148-150°C |
| 1.143 | Cl | $-CH_2-$ | $-CONHCH_2CH_2CH_2OH$ | Smp. 157-160°C |
| 1.144 | Cl | $-CH_2-$ | $-CONHC_4H_9-n \cdot H_2O$ | Smp. 87-90°C |
| 1.145 | Cl | $-CH_2-$ | $-CONHC_2H_5$ | Smp. 94-98°C |
| 1.146 | Cl | $-CH_2-$ | $-CONHCH_2-$ 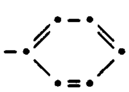 $\cdot \frac{1}{2} H_2O$ | Smp. 146-149°C |
| 1.147 | H | $-CH_2-$ | $-CONHNH_2 \cdot H_2O$ | Smp. 121-124°C |
| 1.148 | H | $-CH_2-$ | $-COONa \cdot H_2O$ | Smp. 140-142°C |
| 1.149 | H | $-CH_2-$ | $-COOK \cdot H_2O$ | Smp. > 200°C |
| 1.150 | H | $-CH_2-$ | $-COO^{\ominus}\ \overset{\oplus}{H}N(CH_3)_3$ | Smp. 176-178°C |
| 1.151 | H | $-CH_2-$ | $-COO^{\ominus}\ \overset{\oplus}{H}N(CH_2CH_2OH)_3$ | Smp. 97-98°C |
| 1.152 | Cl | $-CH_2-$ | $-COOK \cdot H_2O$ | Smp. > 260°C |
| 1.153 | Cl | $-CH_2-$ | $-COONa \cdot H_2O$ | Smp. > 260°C |
| 1.154 | H | $-CH_2-$ | $-COO^{\ominus}\ \overset{\oplus}{H}N(C_2H_5)_3$ | Smp. 255-257°C (Zers.) |

Tabelle 1 (Fortsetzung)

| Nr. | X | A | Z | physikal. Konstante |
|---|---|---|---|---|
| 1.155 | Cl | $-CH_2-$ | $-COO^{\ominus}\ {}^{\oplus}HN_4$ | Smp. 227-228°C (Zers.) |
| 1.156 | Cl | $-CH_2-$ | $-COO^{\ominus}\ \overset{\oplus}{H}N(CH_2CH_2OH)_3$ | Smp. 132-156°C (Zers.) |
| 1.157 | Cl | $-\underset{CH_3}{CH}-$ | -COO- 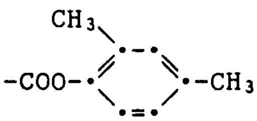 | Smp. 120-122°C |
| 1.158 | Cl | $-CH_2-$ | $-COO\overset{CH_3}{C}H(CH_2)_5CH_3$ | Smp. 65-67°C |
| 1.159 | Cl | $-CH_2-$ | $-COOCH_2CH{=}CH-CH_3$ | Smp. 100-102°C |
| 1.160 | Cl | $-CH_2-$ | $-COOCH_2-\overset{CH_3}{C}{=}CH_2$ | Smp. 94-95°C |
| 1.161 | Cl | $-CH_2-$ | $-COOCH_2CH_2OC_3H_7-i$ | Smp. 70-72°C |
| 1.162 | Cl | $-CH_2-$ | $-COOCH_2CH_2-O-$ 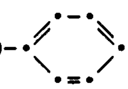 | Smp. 79-80,5°C |
| 1.163 | Cl | $-\underset{CH_3}{CH}-$ | $-COOC_3H_7-i$ | $n_D^{24} = 1.5642$ |
| 1.164 | Cl | $-\underset{CH_3}{CH}-$ | $-COO(CH_2)_7CH_3$ | $n_D^{23} = 1.5356$ |
| 1.165 | Cl | $-\underset{CH_3}{CH}-$ | $-COO\overset{CH_3}{C}H(CH_2)_5CH_3$ | $n_D^{25} = 1.5370$ |
| 1.166 | Cl | $-\underset{CH_3}{CH}-$ | $-COO(CH_2)_{11}CH_3$ | Smp. 54-55°C |
| 1.167 | Cl | $-\underset{CH_3}{CH}-$ | $-COOCH_2-$ 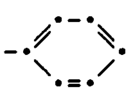 | Smp. 57-59°C |
| 1.168 | Cl | $-\underset{CH_3}{CH}-$ | $-COOCH_2CH_2OC_3H_7-i$ | $n_D^{32} = 1.5403$ |
| 1.169 | Cl | $-\underset{CH_3}{CH}-$ | $-COOCH_2CH_2O-$ 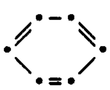 | $n_D^{29} = 1.5962$ |
| 1.170 | Cl | $-\underset{CH_3}{CH}-$ | $-COOCH_2CH{=}CH_2$ | Smp. 40-41°C |

Tabelle 1 (Fortsetzung)

| Nr. | X | A | Z | physikal. Konstante |
|---|---|---|---|---|
| 1.171 | Cl | -CH-<br>$CH_3$ | $-COOCH_2CH=CH-CH_3$ | Smp. 39-40°C |
| 1.172 | Cl | -CH-<br>$CH_3$ | $CH_3$<br>$-COOCH_2-C=CH_2$ | Smp. 62-63°C |
| 1.173 | Cl | -CH-<br>$CH_3$ | -COO- 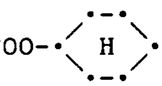 | $n_D^{30}$ = 1.5677 |
| 1.174 | Cl | $-CH_2-$ | -COO- 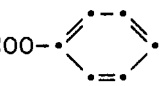 | Smp. 165-170°C |
| 1.175 | Cl | $-CH_2-$ | -COO- 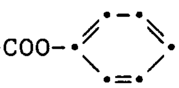 $-CH_3$ | Smp. 143-145°C |
| 1.176 | Cl | $-CH_2-$ | -COO- 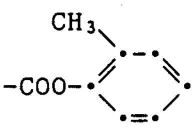 | Smp. 111-116°C |
| 1.177 | Cl | $-CH_2-$ | -COO- 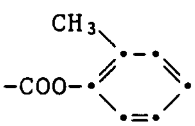 $-CH_3$ | Smp. 108-119°C |
| 1.178 | Cl | -CH-<br>$CH_3$ | -COO- 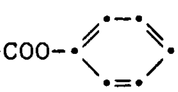 | Smp. 102-105°C |

Tabelle 1 (Fortsetzung)

| Nr. | X | A + Z | physikal. Konstante |
|---|---|---|---|
| 1.179 | Cl | 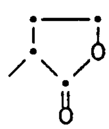 | Smp. 140-141,5°C |

Tabelle 1 (Fortsetzung)

| Nr. | X | A | Z | physikal. Konstante |
|---|---|---|---|---|
| 1.180 | Cl | $-CH_2-$ | $CH_3$<br>$-COOCHCH_2CH_2CH_3$ | Smp. 65-70°C |
| 1.181 | H | $-CH_2-$ | $CH_3$<br>$-COOCH_2-CH(CH_2)_2CH_3$ | $n_D^{22}$ = 1.5525 |
| 1.182 | Cl | $-CH_2-$ | -COO- 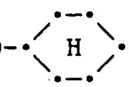 | Smp. 112-113°C |
| 1.183 | Cl | $-CH_2-$ | $CH_3$<br>$-COOCH_2CH-CH_3$ | Smp. 113-114°C |
| 1.184 | H | $-CH_2-$ | $OCH_3$<br>$-COO(CH_2)_2CHCH_3$ | $n_D^{22}$ = 1.5580 |
| 1.185 | H | $-CH_2-$ | $-COOCH_2CH_2OCH_2CH_2O(CH_2)_3CH_3$ | $n_D^{22}$ = 1.5389 |
| 1.186 | H | $-CH_2-$ | $-COS(CH_2)_3CH_3$ | $n_D^{23}$ = 1.6096 |
| 1.187 | H | $-CH_2-$ | -COO- 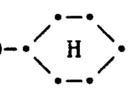 | $n_D^{23}$ = 1.5755 |
| 1.188 | H | $-CH_2-$ | $-COO(CH_2)_4CH_3$ | $n_D^{23}$ = 1.5591 |
| 1.189 | H | $-CH_2-$ | $-COS(CH_2)_7CH_3$ | $n_D^{22}$ = 1.5697 |
| 1.190 | Cl | $-CH_2-$ | $CH_3$<br>$-COOCH_2-CH(CH_2)_2CH_3$ | Smp. 74-75°C |
| 1.191 | Cl | $-CH_2-$ | $-COS(CH_2)_3CH_3$ | $n_D^{22}$ = 1.6076 |
| 1.192 | H | $-CH_2-$ | $-COOCH_2CH=CH-CH_3$ | $n_D^{22}$ = 1.5833 |
| 1.193 | H | $-CH_2-$ | $C_2H_5$<br>$-COOCH_2-CH-C_2H_5$ | $n_D^{23}$ =1.5530 |
| 1.194 | Cl | $-CH_2-$ | $-COOCH_2CH_2OCH_2CH_2O(CH_2)_3CH_3$ | Smp. 39-41°C |
| 1.195 | Cl | $-CH_2-$ | $OCH_3$<br>$-COO(CH_2)_2CHCH_3$ | Smp. 72-73°C |
| 1.196 | Cl | $-CH_2-$ | $-COO(CH_2)_4CH_3$ | Smp. 78-79°C |

Tabelle 1 (Fortsetzung)

| Nr. | X | A | Z | physikal. Konstante |
|---|---|---|---|---|
| 1.197 | Cl | $-CH_2-$ | $C_2H_5$<br>$-COOCH-(CH_2)_2CH_3$ | Smp. 37-46°C |
| 1.198 | H | $-CH_2-$ | $-COOCH_2CH_2OC_3H_7$-i | $n_D^{22}$ = 1.5546 |
| 1.199 | Cl | $-CH_2-$ | $-COO(CH_2)_{13}CH_3$ | Smp. 75-76°C |
| 1.200 | H | $-CH_2-$ | $C_2H_5$<br>$-COOCH-C_2H_5$ | Smp. 47-50°C |
| 1.201 | H | $-CH_2-$ | 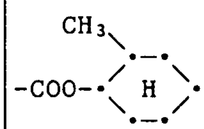 | Smp. 29-31°C |
| 1.202 | Cl | $-CH_2-$ | $C_2H_5$<br>$-COOCH_2-CH-C_2H_5$ | Smp. 58-63°C |
| 1.203 | H | $-CH_2-$ | $-COOCH_2CH_2OCH_2CH_2OC_2H_5$ | $n_D^{22}$ =1.5489 |
| 1.204 | H | $-CH_2-$ | $-COOCH_2CH_2O-$ 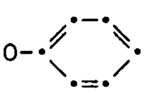 | Smp. 80-81°C |
| 1.205 | Cl | $-CH_2-$ | $C_2H_5$<br>$-COOCH-C_2H_5$ | Smp. 55-80°C |
| 1.206 | H | $-CH_2-$ | $CH_3$ $CH_3$<br>$-COOCHCH_2CH-CH_3$ | $n_D^{22}$ =1.5463 |
| 1.207 | H | $-CH_2-$ | $-COO(CH_2)_{13}CH_3$ | Smp. 35-36°C |
| 1.208 | H | $-CH_2-$ | $-COOCH_2CH_2O(CH_2)_3CH_3$ | $n_D^{22}$ =1.5495 |
| 1.209 | Cl | $-CH_2-$ | $-COOCH_2CH_2OCH_2CH_2OC_2H_5$ | Smp. 42-43°C |
| 1.210 | H | $-CH_2-$ | $CH_3$<br>$-COOCH_2-CH-C_2H_5$ | $n_D^{22}$ =1.5566 |
| 1.211 | Cl | $-CH_2-$ | $CH_3$ $CH_3$<br>$-COOCHCH_2CH-CH_3$ | Smp. 63-64°C |
| 1.212 | H | $-CH_2-$ | $CH_3$<br>$-COSCH-C_2H_5$ | $n_D^{22}$ =1.5973 |
| 1.213 | Cl | $-CH_2-$ | 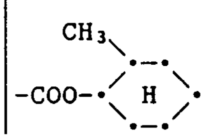 | Smp. 98-101°C |

Tabelle 1 (Fortsetzung)

| Nr. | X | A | Z | physikal. Konstante |
|---|---|---|---|---|
| 1.214 | H | $-CH_2-$ | 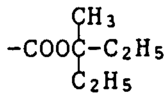 | $n_D^{22}$ =1.5551 |
| 1.215 | H | $-CH_2-$ | 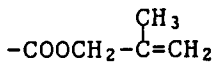 | $n_D^{22}$ =1.5805 |
| 1.216 | H | $-CH_2-$ | 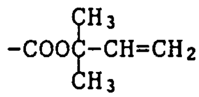 | $n_D^{22}$ =1.5793 |
| 1.217 | H | $-CH_2-$ | $-COOCH_2CH_2OCH_2CH_2OCH_3$ | $n_D^{23}$ =1.5560 |
| 1.218 | Cl | $-CH_2-$ | 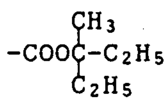 | $n_D^{22}$ =1.5632 |
| 1.219 | Cl | $-CH_2-$ | $-COO(CH_2)_{10}CH_3$ | Smp.70-71°C |
| 1.220 | Cl | $-CH_2-$ | 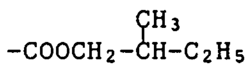 | Smp.78-79°C |
| 1.221 | H | $-CH_2-$ | 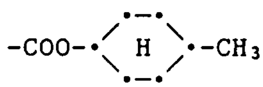 | Smp.40-42°C |
| 1.222 | H | $-CH_2-$ | $-COO(CH_2)_6CH_3$ | $n_D^{23}$ =1.5469 |
| 1.223 | H | $-CH_2-$ | 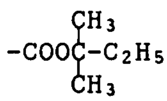 | $n_D^{22}$ =1.5581 |
| 1.224 | Cl | $-CH_2-$ | $-COOCH_2CH_2O(CH_2)_3CH_3$ | Smp. 69-70°C |
| 1.225 | Cl | $-CH_2-$ | 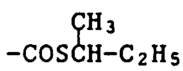 | Smp. 55-56°C |
| 1.226 | Cl | $-CH_2-$ | 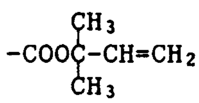 | Smp. 83-87°C |
| 1.227 | H | $-CH_2-$ | $-COSCH_3$ | Smp. 41-44°C |
| 1.228 | Cl | $-CH_2-$ | $-COOCH_2CH_2OCH_2CH_2OCH_3$ | $n_D^{23}$ =1.5633 |
| 1.229 | Cl | $-CH_2-$ | $-COSCH_3$ | Smp. 89-91°C |

Tabelle 1 (Fortsetzung)

| Nr. | X | A | Z | physikal. Konstante |
|---|---|---|---|---|
| 1.230 | Cl | $-CH_2-$ | 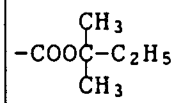 | Smp. 53-54°C |
| 1.231 | H | $-CH_2-$ | $-COO(CH_2)_{10}CH_3$ | $n_D^{23}$ =1.5310 |
| 1.232 | Cl | $-CH_2-$ | $-COO(CH_2)_6CH_3$ | Smp. 74-76°C |
| 1.233 | H | $-CH_2-$ | 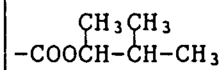 | $n_D^{23}$=1.5554° |
| 1.234 | Cl | $-CH_2-$ | 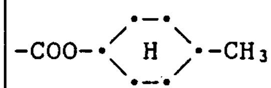 | Smp. 103-105°C |
| 1.235 | H | $-CH_2-$ | 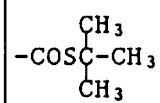 | $n_D^{23}$=1.5987 |
| 1.236 | Cl | $-CH_2-$ | $-COS(CH_2)_{11}CH_3$ | Smp. 26-28°C |
| 1.237 | Cl | $-CH_2-$ | $-COS(CH_2)_9CH_3$ | Smp. 29-31°C |
| 1.238 | Cl | $-CH_2-$ | $-COO(CH_2)_9CH_3$ | Smp. 73-74°C |
| 1.239 | H | $-CH_2-$ | 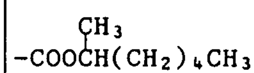 | $n_D^{23}$=1.5433 |
| 1.240 | Cl | $-CH_2-$ | 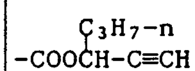 | Smp. 81-82°C |
| 1.241 | H | $-CH_2-$ | 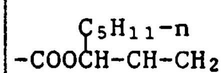 | $n_D^{23}$=1.5472 |
| 1.242 | Cl | $-CH_2-$ | 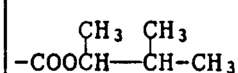 | Smp. 70-74°C |
| 1.243 | Cl | $-CH_2-$ | 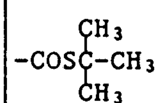 | $n_D^{22}$=1.5996 |
| 1.244 | H | $-CH_2-$ | 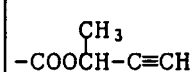 | $n_D^{23}$=1.5837 |
| 1.245 | H | $-CH_2-$ | $-COS(CH_2)_{11}CH_3$ | $n_D^{23}$=1.5523 |
| 1.246 | H | $-CH_2-$ | 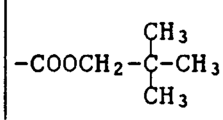 | $n_D^{22}$=1.5524 |

Tabelle 1 (Fortsetzung)

| Nr. | X | A | Z | physikal. Konstante |
|---|---|---|---|---|
| 1.247 | H | $-CH_2-$ | $-COSC_2H_5$ | $n_D^{23}=1.6310$ |
| 1.248 | Cl | $-CH_2-$ | $CH_3$<br>$-COOCH_2-C-CH_3$<br>$CH_3$ | Smp. 76-81°C |
| 1.249 | Cl | $-CH_2-$ | $-COSC_2H_7$-n | $n_D^{22}=1.6136$ |
| 1.250 | H | $-CH_2-$ | $-COO(CH_2)_9CH_3$ | $n_D^{22}=1.5308$ |
| 1.251 | Cl | $-CH_2-$ | $CH_3$<br>$-COOCH(CH_2)_4CH_3$ | Smp. 65-67°C |
| 1.252 | H | $-CH_2-$ | $CH_3$<br>$-COO(CH_2)_2CH-CH_3$ | $n_D^{23}=1.5568$ |
| 1.253 | H | $-CH_2-$ | $C_2H_5$<br>$-COOCH(CH_2)_3CH_3$ | $n_D^{23}=1.5454$ |
| 1.254 | Cl | $-CH_2-$ | $-COO(CH_2)_8CH_3$ | Smp. 78-79°C |
| 1.255 | H | $-CH_2-$ | $CH_3$<br>$-COSCH_2CHCH_3$ | $n_D^{23}=1.6049$ |
| 1.256 | Cl | $-CH_2-$ | $-COSC_2H_5$ | Smp. 55-57°C |
| 1.257 | H | $-CH_2-$ | $-COO(CH_2)_8CH_3$ | $n_D^{24}=1.5436$ |
| 1.258 | Cl | $-CH_2-$ | $C_2H_5$<br>$-COOCH_2-CH(CH_2)_3CH_3$ | Smp. 45-47°C |
| 1.259 | Cl | $-CH_2-$ | $CH_3$<br>$-COSCH_2CH-CH_3$ | $n_D^{23}=1.6045$ |
| 1.260 | H | $-CH_2-$ | $-COS(CH_2)_9CH_3$ | $n_D^{23}=1.5630$ |
| 1.261 | Cl | $-CH_2-$ | $CH_3$<br>$-COO(CH_2)_2CH-CH_3$ | Smp. 72-74°C |
| 1.262 | Cl | $-CH_2-$ | $C_2H_5$<br>$-COOCH(CH_2)_3CH_3$ | $n_D^{22}=1.5542$ |
| 1.263 | H | $-CH_2-$ | $-COO(CH_2)_5CH_3$ | $n_D^{22}=1.5512$ |

Tabelle 1 (Fortsetzung)

| Nr. | X | A | Z | physikal. Konstante |
|---|---|---|---|---|
| 1.264 | H | $-CH_2-$ | $C_3H_7-n$<br>$-COOCH(CH_2)_2CH_3$ | Smp. 48-50°C |
| 1.265 | H | $-CH_2-$ | $-COS(CH_2)_4CH_3$ | $n_D^{22}=1.5937$ |
| 1.266 | H | $-CH_2-$ | $-COSC_3H_7-iso$ | $n_D^{23}=1.5821$ |
| 1.267 | H | $-CH_2-$ | $C_2H_5$<br>$-COOCH_2CH-(CH_2)_3CH_3$ | $n_D^{22}=1.5395$ |
| 1.268 | Cl | $-CH_2-$ | $C_3H_7-n$<br>$-COOCH(CH_2)_2CH_3$ | Smp. 55-57°C |
| 1.269 | Cl | $-CH_2-$ | $-COS(CH_2)_5CH_3$ | $n_D^{22}=1.5882$ |
| 1.270 | Cl | $-CH_2-$ | $-COS(CH_2)_4CH_3$ | $n_D^{23}=1.5990$ |
| 1.271 | Cl | $-CH_2-$ | $-COO(CH_2)_5CH_3$ | Smp. 71-71°C |
| 1.272 | Cl | $-CH_2-$ | $-COSC_3H_7-iso$ | Smp. 62-64°C |
| 1.273 | Cl | $-CH_2-$ | $C_2H_5$ $CH_3$<br>$-COOCH-CH_2CHC_2H_5$ | Smp. 25-29°C |
| 1.274 | H | $-CH_2-$ | $C_3H_7-i$<br>$-COOCH-C_3H_7-i$ | $n_D^{22}=1.5468$ |
| 1.275 | H | $-CH_2-$ | $CH_3$<br>$-COOCH-(CH_2)_3CH_3$ | $n_D^{23}=1.5531$ |
| 1.276 | Cl | $-CH_2-$ | $C_5H_{11}-n$<br>$-COOCH-CH=CH_2$ | $n_D^{23}=1.5579$ |
| 1.277 | H | $-CH_2-$ | $C_2H_5$<br>$-COOCH-(CH_2)_2CH_3$ | Smp. 42-44°C |
| 1.278 | H | $-CH_2-$ | $-COSC_3H_7-n$ | $n_D^{22}=1.6108$ |
| 1.279 | Cl | $-CH_2-$ | $CH_3$<br>$-COOCH-(CH_2)_3CH_3$ | Smp.68-71°C |
| 1.280 | H | $-CH_2-$ | $C_2H_5$ $CH_3$<br>$-COOCHCH_2CHC_2H_5$ | $n_D^{23}=1.5472$ |

Tabelle 1 (Fortsetzung)

| Nr. | X | A | Z | physikal. Konstante |
|---|---|---|---|---|
| 1.281 | Cl | $-CH_2-$ | $C_3H_7-i$<br>$-COOCH-C_3H_7-i$ | Smp. 88-89°C |
| 1.282 | H | $-CH_2-$ | $-COS(CH_2)_5CH_3$ | $n_D^{22}=1.5804$ |
| 1.283 | H | $-CH_2-$ | $-COO(CH_2)_9-CH=CH_2$ | $n_D^{22}=1.5386$ |
| 1.284 | H | $-CH_2-$ | $C_3H_7-n$<br>$-COOCH-C{\equiv}CH$ | $n_D^{22}=1.5659$ |
| 1.285 | Cl | $-CH_2-$ | $CH_3$<br>$-COOCH-C{\equiv}CH$ | Smp. 97-100°C |
| 1.286 | H | $-CH_2-$ | $CH_3$<br>$-COOC-C{\equiv}CH$<br>$C_2H_5$ | $n_D^{22}=1.5688$ |
| 1.287 | Cl | $-CH_2-$ | $-COO(CH_2)_9-CH=CH_2$ | Smp. 66-67°C |
| 1.288 | Cl | $-CH_2-$ | $CH_3$<br>$-COO-C-C{\equiv}CH$<br>$CH_3$ | Smp. 76-81°C |
| 1.289 | H | $-CH_2$ | $CH_3$<br>$-COO-C-C{\equiv}CH$<br>$CH_3$ | $n_D^{23}=1.5740$ |
| 1.290 | Cl | $-CH_2-$ | $CH_3$<br>$-COO-C-C{\equiv}CH$<br>$C_2H_5$ | Smp. 78-79°C |
| 1.291 | Cl | $-CH_2-$ | $CH_3\ CH_3$<br>$-COO-CH-CH-C_2H_5$ | Smp. 71-73°C |
| 1.292 | Cl | $-CH-$<br>$CH_3$ | $-COOCH_2-$ 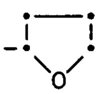 | $n_D^{30}=1.5734$ |
| 1.293 | Cl | $-CH_2-$ | $-COOCH_2COOC_4H_9-n$ | Smp. 52-54°C |
| 1.294 | Cl | $-CH_2-$ | $-COOCH-COOC_4H_9-n$<br>$CH_3$ | $n_D^{22}=1.5508$ |
| 1.295 | Cl | $-CH_2-$ | $CH_3\qquad CH_3$<br>$-COOCHCH_2CH_2CH-CH_3$ | Smp. 55-59°C |
| 1.296 | Cl | $-CH_2-$ | 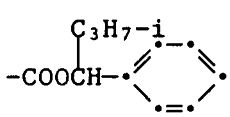 | Smp. 43-47°C |

Tabelle 1 (Fortsetzung)

| Nr. | X | A | Z | physikal. Konstante |
|---|---|---|---|---|
| 1.297 | Cl | $-CH_2-$ | 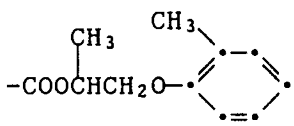 | Smp. 75-78°C |
| 1.298 | Cl | $-CH_2-$ | 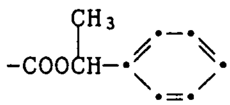 | Smp. 117-122°C |
| 1.299 | Cl | $-CH_2-$ | 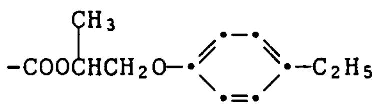 | Smp. 63-68°C |
| 1.300 | Cl | $-CH_2-$ | 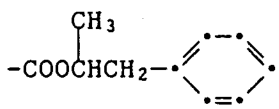 | Smp. 116-118°C |
| 1.301 | Cl | $-CH_2-$ | 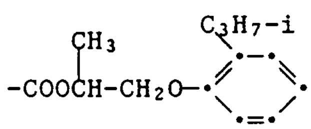 | Smp. 41.43°C |
| 1.302 | Cl | $-CH_2-$ | 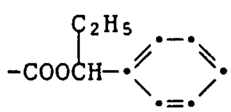 | Smp. 74-76°C |
| 1.303 | Cl | $-CH_2-$ | 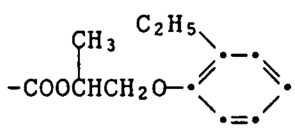 | Smp. 96-98°C |
| 1.304 | Cl | $-CH_2-$ | 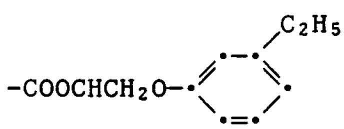 | Smp. 82-85°C |
| 1.305 | Cl | $-CH_2-$ | 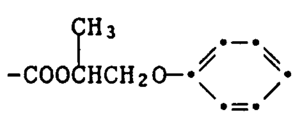 | Smp. 42-44°C |
| 1.306 | Cl | $-CH_2-$ | 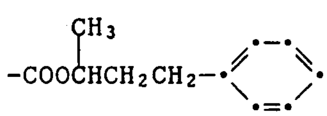 | Smp. 78-79°C |

Tabelle 1 (Fortsetzung)

| Nr. | X | A | Z | physikal. Konstante |
|---|---|---|---|---|
| 1.307 | Cl | $-CH_2-$ | 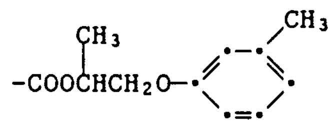 | Smp. 58-61°C |
| 1.308 | Cl | $-CH_2-$ | 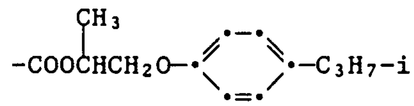 | Smp. 35-38°C |
| 1.309 | Cl | $-CH_2-$ | 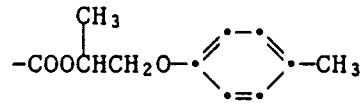 | Smp. 82-84°C |

Die Erfindung betrifft auch ein Verfahren zum selektiven Bekämpfen von Unkräutern in Nutzpflanzenkulturen, welches darin besteht, dass man die Nutzpflanzen, deren Samen oder Stecklinge oder deren Anbaufläche gleichzeitig oder unabhängig voneinander mit einer herbizid wirksamen Menge des N-Benzoyl-N-(3-chlor-4-fluorphenyl)alaninderivates der Formel I und einer herbizid-antagonistisch wirksamen Menge eines Chinolinderivates der Formel II behandelt.

Als Kulturpflanzen, welche durch die Chinolin-Derivate der Formel II gegen schädigende Wirkungen der oben erwähnten Herbiziden geschützt werden können, kommen insbesondere diejenigen in Betracht, die auf dem Nahrungs- oder Textilsektor von Bedeutung sind, beispielsweise Zuckerrohr und insbesondere Kulturhirse, Mais, Reis und andere Getreidearten (Weizen, Roggen, Gerste, Hafer).

Bei den zu bekämpfenden Unkräutern kann es sich sowohl um monokotyle wie um dikotyle Unkräuter handeln.

Als Kulturpflanzen oder Teile dieser Pflanzen kommen beispielsweise die vorstehend genannten in Betracht. Als Anbauflächen gelten die bereits mit den Kulturpflanzen bewachsenen oder mit dem Saatgut dieser Kulturpflanzen beschickten Bodenareale, wie auch die zur Bebauung mit diesen Kulturpflanzen bestimmten Böden.

Ein Gegenmittel oder Antidot der Formel II kann je nach Anwendungszweck zur Vorbehandlung des Saatgutes der Kulturpflanze (Beizung des Samens oder der Stecklinge) eingesetzt oder vor oder nach der Saat in den Boden gegeben werden. Es kann aber auch für sich allein oder zusammen mit dem Herbizid vor oder nach dem Auflaufen der Pflanzen appliziert werden. Die Behandlung der Pflanze oder des Saatgutes mit dem Antidot kann daher grundsätzlich unabhängig vom Zeitpunkt der Applikation der phytotoxischen Chemikalie erfolgen. Die Behandlung der Pflanze kann jedoch auch durch gleichzeitige Applikation von phytotoxischer Chemikalie und Gegenmittel (Tankmischung) erfolgen. Die preemergente Behandlung schliesst sowohl die Behandlung der Anbaufläche vor der Aussaat (ppi = pre plant incorporation) als auch die Behandlung der angesäten, aber noch nicht bewachsenen Anbauflächen ein.

Die zu applizierende Aufwandmenge Antidot im Verhältnis zum Herbizid richtet sich weitgehend nach der Anwendungsart. Bei einer Feldbehandlung, welche entweder unter Verwendung einer Tankmischung mit einer Kombination von Antidot und Herbizid oder durch getrennte Applikation von Antidot und Herbizid erfolgt, liegt in der Regel ein Verhältnis von Antidot zu Herbizid von 1:100 bis 10:1, bevorzugt 1:20 bis 1:1, und insbesondere 1:1, vor. Dagegen werden bei der Samenbeizung weit geringere Mengen Antidot im Verhältnis zur Aufwandmenge an Herbizid pro Hektar Anbaufläche benötigt.

In der Regel werden bei der Feldbehandlung 0,001 bis 5,0 kg Antidot/ha, vorzugsweise 0,01 bis 0,5 kg Antidot/ha, appliziert,

Bei der Samenbeizung werden im allgemeinen 0,01 bis 10 g Antidot/kg Samen, vorzugsweise 0,05 bis 2 g Antidot/kg Samen, appliziert. Wird das Antidot in flüssiger Form kurz vor der Aussaat unter Samenquellung appliziert, so werden zweckmässigerweise Antidot-Lösungen verwendet, welche den Wirkstoff in einer Konzentration von 1 bis 10 000, vorzugsweise von 100 bis 1 000 ppm, enthalten.

Zur Applikation werden die Verbindungen der Formel II oder Kombinationen von Verbindungen der Formel II mit den zu antagonisierenden Herbiziden zweckmässigerweise zusammen mit den in der

Formulierungstechnik üblichen Hilfsmitteln eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, auch Verkapselungen in z.B. polymeren Stoffen, in bekannter Weise verarbeitet. Die Anwendungsverfahren wie Versprühen, Vernebeln, Verstäuben, Verstreuen, Bestreichen oder Giessen werden gleich wie die Art der zu verwendenden Mittel den angestrebten Zielen und den gegebenen Verhältnissen entsprechend gewählt.

Die Formulierungen, d.h. die den Wirkstoff der Formel II oder eine Kombination von Wirkstoff der Formel II mit zu antagonisierendem Herbizid und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmiteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder -ethylether, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach Art des zu formulierenden Wirkstoffs der Formel II und gegebenenfalls auch dem zu antagonisierenden Herbizid nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäure-methyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten. Die sulfonierten Benzimidazolderivate enthalten vorzugsweise 2-Sulfonsäuregruppen und einen Fettsäurerest mit 8 bis 22 C-Atomen. Alkylarylsulfonate sind z.B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxid-Adduktes oder Phospholipide in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 Propylenglykolethergruppen enthaltenden Polyethylenoxidaddukte an Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanolerwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi(2-chlorethyl)-ethylammoniumbromid.

Die in der Formulierungstechnik gebräuchlichen Tenside sind u.a. in folgenden Publikationen beschrieben:

"Mc Cutcheon's Detergents and Emulsifiers Annual"
MC Publishing Corp., Ridgewood New Jersey, 1981.
Stache, H., "Tensid-Taschenbuch",
Carl Hanser Verlag, München/Wien, 1981.

Die agrochemischen Zubereitungen enthalten in der Regel 0,1 bis 99 Gewichtsprozent, insbesondere 0,1 bis 95 Gew-%, Wirkstoff der Formel II oder Wirkstoffgemisch Antidot/Herbizid, 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-%, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Für die Verwendung von Verbindungen der Formel II oder sie enthaltender Mittel zum Schützen von Kulturpflanzen gegen schädigende Wirkungen von Herbiziden der Formel I kommen verschiedene Methoden und Techniken in Betracht, wie beispielsweise die folgenden:

i) Samenbeizung

a) Beizung der Samen mit einem als Spritzpulver formulierten Wirkstoff der Formel II durch Schütteln in einem Gefäss bis zur gleichmässigen Verteilung auf der Samenoberfläche (Trockenbeizung). Man verwendet dabei etwa 1 bis 500 g Wirkstoff der Formel II (4 g bis 2 kg Spritzpulver) pro 100 kg Saatgut.

b) Beizung der Samen mit einem Emulsionskonzentrat des Wirksoffs der Formel II nach der Methode a) (Nassbeizung).

c) Beizung durch Tauchen des Saatguts in eine Brühe mit 100-1000 ppm Wirkstoff der Formel II während 1 bis 72 Stunden und gegebenenfalls nachfolgendes Trocknen der Samen (Tauchbeizung).

Die Beizung des Saatguts oder die Behandlung des angekeimten Sämlings sind naturgemäss die bevorzugten Methoden der Applikation, weil die Wirkstoffbehandlung vollständig auf die Zielkultur gerichtet ist. Man verwendet in der Regel 1 bis 1000 g Antidot, vorzugsweise 5 bis 250 g Antidot, pro 100 kg Saatgut, wobei man je nach Methodik, die auch den Zusatz anderer Wirkstoffe oder Mikronährstoffe ermöglicht, von den angegebenen Grenzkonzentrationen nach oben oder unten abweichen kann (Wiederholungsbeize).

ii) Applikation aus Tankmischung Eine flüssige Aufarbeitung eines Gemisches von Antidot und Herbizid (gegenseitiges Mengenverhältnis zwischen 10:1 und 1:100) wird verwendet, wobei die Aufwandmenge an Herbizid 0,01 bis 5,0 kg pro Hektar beträgt. Solche Tankmischung wird vor oder nach der Aussaat appliziert.

iii) Applikation in der Saatfurche Das Antidot wird als Emulsionskonzentrat, Spritzpulver oder als Granulat in die offene besäte Saatfurche eingebracht und hierauf wird nach dem Decken der Saatfurche in normaler Weise das Herbizid im Vorauflaufverfahren appliziert.

iv) Kontrollierte Wirkstoffabgabe Der Wirkstoff der Formel II wird in Lösung auf mineralische Granulatträger oder polymerisierte Granulate (Harnstoff/Formaldehyd) aufgezogen und trocknen gelassen. Gegebenenfalls kann ein Ueberzug aufgebracht werden (Umhüllungsgranulate), der es erlaubt, den Wirkstoff über einen bestimmten Zeitraum dosiert abzugeben.

Formulierungsbeispiele für flüssige Wirkstoffe der Formel II oder Mischungen derselben mit einem Herbizid der Formel I (% = Gewichtsprozent)

| 1. Emulsions-Konzentrate | a) | b) | c) |
|---|---|---|---|
| Wirkstoffmischung | 25 % | 40 % | 50 % |
| Ca-Dodecylbenzolsulfonat | 5 % | 8 % | 6 % |
| Ricinusöl-polyethylenglykolether (36 Mol EO) | 5 % | - | - |
| Tributylphenol-polyethylenglykolether (30 Mol EO) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| 2. Lösungen | a) | b) | c) | d) |
|---|---|---|---|---|
| Wirkstoffmischung | 80 % | 10 % | 5 % | 95 % |
| Ethylenglykol-monomethyl-ether | 20 % | - | - | - |
| Polyethylenglykol MG 400 | - | 70 % | - | - |
| N-Methyl-2-pyrrolidon | - | 20 % | - | - |
| Epoxidiertes Kokosnussöl | - | - | 1 % | 5 % |
| Benzin (Siedegrenzen 160-190°) | - | - | 94 % | - |

Die Lösungen sind zur Anwendung in Form kleinster Tropfen geeignet.

| 3. Granulate | a) | b) |
|---|---|---|
| Wirkstoffmischung | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| 4. Stäubemittel | a) | b) |
|---|---|---|
| Wirkstoffmischung | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

Formulierungsbeispiele für feste Wirkstoffe der Formel II oder Mischungen derselben mit einem Herbizid der Formel I (% = Gewichtsprozent)

| 5. Spritzpulver | a) | b) | c) |
|---|---|---|---|
| Wirkstoffmischung | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyethylenglykolether (7-8 Mol EO) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 6. Emulsions-Konzentrate | |
|---|---|
| Wirkstoffmischung | 10 % |
| Octylphenolpolyethylenglykolether (4-5 Mol EO) | 3 % |
| Ca-Dodecylbenzolsulfonat | 3 % |
| Ricinusölpolyglykolether (35 Mol EO) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| 7. Stäubemittel | a) | b) |
|---|---|---|
| Wirkstoffmischung | 5 % | 8 % |
| Talkum | 95 % | - |
| Kaolin | - | 92 % |

Man erhält anwendungsfertige Stäubemittel, indem der Wirkstoff mit den Trägerstoffen vermischt und auf einer geeigneten Mühle vermahlen wird.

| 8. Extruder-Granulate | |
|---|---|
| Wirkstoffmischung | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

| 9. Umhüllungs-Granulate | |
|---|---|
| Wirkstoffmischung | 3 % |
| Polyethylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| 10. Suspensions-Konzentrate | |
|---|---|
| Wirkstoffmischung | 40 % |
| Ethylenglykol | 10 % |
| Nonylphenolpolyethylenglykolether (15 Mol EO) | 6 % |
| Na-Ligninsulfonat | 10 % |
| Carboxymethylcellulose | 1 % |
| 37%ige wässrige Formaldehyd-Lösung | 0,2 % |
| Silikonöl in Form einer 75%igen wässrigen Emulsion | 0,8 % |
| Wasser | 32 % |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Biologische Beispiele

Die Fähigkeit der Verbindungen der Formel II, Kulturpflanzen vor der phytotoxischen Wirkung starker Herbizide zu schützen, kann aus dem folgendem Beispiel ersehen werden.

Zur Ueberprüfung der Safeningwirkung werden Samen von Gerste (Sorte: Harrington und Bonanza) und dem Ungras Avena fatua in Töpfen von 11 cm Durchmesser in Erde angezogen. Die Kultur der Pflanzen erfolgt im Gewächshaus unter angepassten Temperatur- und Lichtverhältnissen. Das Giessen resp. Düngen der Pflanzen erfolgt nach Bedarf.

Die Applikation der Safenersubstanz in der Aufwandmenge von 200/100/50 g/ha erfolgt als Tankmischung mit dem Herbizid in der Aufwandmenge von 800 und 600 g/ha und mit einer Wasseraufwandmenge von 550 lt./ha im Nachauflauf (postemergent).

Zur Erfassung der Safeningwirkung (Schutzwirkung) wird 17 Tage nach der Applikation die allgemeine Schädigung (Phytotox) an den Pflanzen bonitiert (0 % Phyto = kein Schaden, wie unbehandelte Kontrollpflanze, 100 % Phyto = Totalschaden). Aus der Differenz der Phyto der Herbizidbehandlung allein und der Kombination von Herbizid + Safener ergibt sich die in der Tabelle aufgeführte Schutzwirkung in %.

Die Resultate sind untenstehend zusammengefasst. Das verwendete Herbizid ist N-Benzoyl-N-(3-chlor-4-fluorphenyl)-DL-alanin (Flamiprop Racemat), das verwendete Gegenmittel (Safener) ist 4-Chlor-7-(hex-2-yloxy)-chinolin, Verbindung 1.251.

| Herbizid Aufwandmenge | Safener Aufwandmenge | Schutzwirkung bei | | |
|---|---|---|---|---|
| | | Gerste "Harrington" | Gerste "Bonanza" | Avena fatua |
| 800 g/ha + 200 g/ha | | 50 % | 55 % | 5 % |
| 800 g/ha + 100 g/ha | | 40 % | 45 % | 5 % |
| 800 g/ha + 50 g/ha | | 40 % | 45 % | 5 % |
| 600 g/ha + 200 g/ha | | 40 % | 35 % | 5 % |
| 600 g/ha + 100 g/ha | | 35 % | 40 % | 5 % |
| 600 g/ha + 50 g/ha | | 40 % | 40 % | 5 % |

Da die Schutzwirkung bei Gerste 7-11 mal stärker ist als beim Ungras, kann mit dieser Mischung erfolgreich Avena fatua (Wildhafer) in Gerstekulturen bekämpft werden.

## Patentansprüche

1. Mittel zur selektiven Kontrolle von Unkräutern in Kulturen von Nutzpflanzen, dadurch gekennzeichnet dass es neben inerten Trägerstoffen und Zusatzmaterialien als Wirkstoff eine Mischung enthält, die

   a) aus einer herbizid wirksamen Menge eines N-Benzoyl-N-phenylalaninderivat der Formel I

   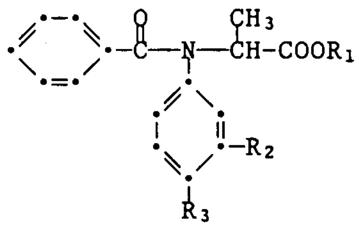

   (I)

   worin
   $R_1$ Wasserstoff oder $C_1$-$C_4$-Alkyl und
   $R_2$ und $R_3$ unabhängig voneinander je Chlor oder Fluor bedeuten oder eines Enantiomers einer solchen Verbindung, und

   b) als Gegenmittel, einer herbizid-antagonistisch wirksamen Menge eines Chinolinderivates der Formel II

   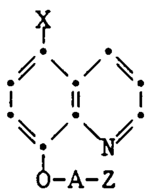

   II

   worin X Wasserstoff oder Halogen
   A eine der Gruppen $-CH_2-$, $-CH_2-CH_2-$ oder $-CH(CH_3)-$ und
   Z Cyan oder Amidoxim, welches am Sauerstoffatom acyliert sein kann, eine Carboxylgruppe oder ein Salz davon, eine Mercaptocarbonylgruppe oder ein Salz davon, eine Carbonsäureestergruppe, eine Carbonsäurethiolestergruppe, eine unsubstituierte oder substituierte Carbonsäureamidgruppe, ein cyclisiertes, unsubstituiertes oder substituiertes Derivat einer Carbonsäureamidgruppe oder eine Carbonsäurehydrazidgruppe oder
   A und Z zusammen einen unsubstituierten oder substituierten Tetrahydrofuran-2-on-Ring bedeuten, unter Einschluss ihrer Säureadditionssalze und Metallkomplexe, besteht

2. Mittel gemäss Patentanspruch 1, dadurch gekennzeichnet, dass es als Herbizid eine Verbindung ausgewählt aus
   N-Benzoyl-N-(3-chlor-4-fluorphenyl)-DL-alanin,
   N-Benzoyl-N-(3-chlor-4-fluorphenyl)-DL-alaninsäure-methylester,
   N-Benzoyl-N-(3-chlor-4-fluorphenyl)-DL-alaninsäure-ethylester,
   N-Benzoyl-N-(3-chlor-4-fluorphenyl)-D-alanin,
   N-Benzoyl-N-(3-chlor-4-fluorphenyl)-D-alaninsäure-methylester,
   N-Benzoyl-N-(3-chlor-4-fluorphenyl)-D-alaninsäure-isopropylester,
   N-Benzoyl-N-(3-chlor-4-fluorphenyl)-L-alanin,
   N-Benzoyl-N-(3-chlor-4-fluorphenyl)-L-alaninsäure-methylester,
   enthält.

3. Mittel gemäss Patentanspruch 1, dadurch gekennzeichnet, dass es als Herbizid den N-Benzoyl-N-(3-chlor-4-fluorphenyl)-DL-alanin-methylester enthält.

4. Mittel gemäss Patentanspruch 1, dadurch gekennzeichnet, dass es als Herbizid das (R)Enantiomer der N-Benzoyl-N-(3-chlor-4-fluorphenyl)-D-alaninsäure enthält.

5. Mittel gemäss Patentanspruch 1, dadurch gekennzeichnet, dass es als Gegenmittel ein Chinolinderivat ausgewählt aus
2-Chinolin-8-yloxy-essigsäureisopropylester,
2-(5-Chlorchinolin-8-yloxy)-essigsäure-n-dodecylester,
2-(5-Chlorchinolin-8-yloxy)-essigsäure-n-butylester,
2-(5-Chlorchinolin-8-yloxy)-essigsäure-n-oktylester,
2-Chinolin-8-yloxy-essigsäure-s-butylester,
2-(5-Chlorchinolin-8-yloxy)-thioessigsäure-n-oktylester,
2-(5-Chlorchinolin-8-yloxy)-essigsäure-(2-butenyl)-ester,
2-(5-Chlorchinolin-8-yloxy)-essigsäuremethallylester,
2-(5-Chlorchinolin-8-yloxy)-essigsäure-(2-isopropyloxyäthyl)-ester,
2-(5-Chlorchinolin-8-yloxy)-essigsäure-(2-phenoxyäthyl)-ester,
2-(5-Chlorchinolin-8-yloxy)-essigsäure-(1-methylbutyl)-ester,
2-(5-Chlorchinolin-8-yloxy)-essigsäurecyclohexylester,
2-(5-Chlorchinolin-8-yloxy)-essigsäure-s-butylester,
2-(5-Chlorchinolin-8-yloxy)-essigsäure-(2-methylpentyl)-ester,
2-(5-Chlorchinolin-8-yloxy)-thioessigsäure-n-butylester,
2-(5-Chlorchinolin-8-yloxy)-essigsäure-(3,6-dioxadecyl)-ester,
2-(5-Chlorchinolin-8-yloxy)-essigsäure-(3-methoxybutyl)-ester,
2-(5-Chlorchinolin-8-yloxy)-essigsäure-(1-äthylbutyl)-ester,
2-(5-Chlorchinolin-8-yloxy)-essigsäure-(2-äthylbutyl)-ester,
2-(5-Chlorchinolin-8-yloxy)-essigsäure-(1-methylisopentyl)-ester,
2-(5-Chlorchinolin-8-yloxy)-essigsäure-n-undecylester,
2-(5-Chlorchinolin-8-yloxy)-essigsäure-(2-methylbutyl)-ester,
2-(5-Chlorchinolin-8-yloxy)-thioessigsäure-s-butylester,
2-(5-Chlorchinolin-8-yloxy)-essigsäure-(3,6-dioxaheptyl)-ester,
2-(5-Chlorchinolin-8-yloxy)-essigsäure-n-heptylester,
2-(5-Chlorchinolin-8-yloxy)-thioessigsäure-n-dodecylester,
2-(5-Chlorchinolin-8-yloxy)-thioessigsäure-n-decylester,
2-(5-Chlorchinolin-8-yloxy)-essigsäure-(1-propylpropargyl)-ester,
2-(5-Chlorchinolin-8-yloxy)-essigsäure-(1-methylisobutyl)-ester,
2-(5-Chlorchinolin-8-yloxy)-thioessigsäure-tert.butylester,
2-(5-Chlorchinolin-8-yloxy)-essigsäure-neopentylester,
2-(5-Chlorchinolin-8-yloxy)-thioessigsäure-n-propylester,
2-(5-Chlorchinolin-8-yloxy)-essigsäure-(1-methylhexyl)-ester,
2-(5-Chlorchinolin-8-yloxy)-thioessigsäureäthylester,
2-(5-Chlorchinolin-8-yloxy)-essigsäure-(2-äthylhexyl)-ester,
2-(5-Chlorchinolin-8-yloxy)-thioessigsäure-i-butylester,
2-Chinolin-8-yloxy-thioessigsäure-n-decylester,
2-(5-Chlorchinolin-8-yloxy)-essigsäure-i-pentylester,
2-(5-Chlorchinolin-8-yloxy)-essigsäure-(1-äthylpentyl)-ester,
2-(5-Chlorchinolin-8-yloxy)-essigsäure-(1-propylbutyl)-ester,
2-(5-Chlorchinolin-8-yloxy)-thioessigsäure-n-hexylester,
2-(5-Chlorchinolin-8-yloxy)-essigsäure-n-hexylester,
2-(5-Chlorchinolin-8-yloxy)-thioessigsäure-i-propylester,
2-(5-Chlorchinolin-8-yloxy)-essigsäure-(1-pentylallyl)-ester,
2-(5-Chlorchinolin-8-yloxy)-essigsäure-(1-methylpentyl)-ester,
2-(5-Chlorchinolin-8-yloxy)-essigsäure-(1,1-dimethylpropargyl)-ester,
2-(5-Chlorchinolin-8-yloxy)-essigsäure-(1-äthyl-1-methylpropargyl)ester,
2-(5-Chlorchinolin-8-yloxy)-essigsäure-n-butyloxycarbonylmethylester,
2-(5-Chlorchinolin-8-yloxy)-essigsäure-(1-n-butyloxycarbonyläthyl)ester,
2-(5-Chlorchinolin-8-yloxy)-essigsäure-(1-methylisohexyl)-ester,
2-(5-Chlorchinolin-8-yloxy)-essigsäure-(1-phenylisobutyl)-ester,
2-(5-Chlorchinolin-8-yloxy)-essigsäure-[1-methyl-2-(2-methylphenoxy)-äthyl]-ester,
2-(5-Chlorchinolin-8-yloxy)-essigsäure-(1-phenyläthyl)-ester,
2-(5-Chlorchinolin-8-yloxy)-essigsäure-[1-methyl-2-(4-äthylphenoxy)-äthyl]-ester,
2-(5-Chlorchinolin-8-yloxy)-essigsäure-(1-methyl-2-phenyläthyl)-ester,
2-(5-Chlorchinolin-8-yloxy)-essigsäure-[1-methyl-2-(2-isopropylphenoxy)-äthyl]-ester,

2-(5-Chlorchinolin-8-yloxy)-essigsäure-(1-phenylpropyl)-ester,
2-(5-Chlorchinolin-8-yloxy)-essigsäure-[1-methyl-2-(2-äthylphenoxy)-äthyl]-ester,
2-(5-Chlorchinolin-8-yloxy)-essigsäure-[1-methyl-2-(3-äthylphenoxy)-äthyl]-ester,
2-(5-Chlorchinolin-8-yloxy)-essigsäure-(1-methyl-2-phenoxyäthyl)-ester,
2-(5-Chlorchinolin-8-yloxy)-essigsäure-(1-methyl-3-phenylpropyl)-ester,
2-(5-Chlorchinolin-8-yloxy)-essigsäure-[1-methyl-2-(3-methylphenoxy)-äthyl]-ester,
2-(5-Chlorchinolin-8-yloxy)-essigsäure-[1-methyl-2-(4-isopropylphenoxy)-äthyl]-ester oder
2-(5-Chlorchinolin-8-yloxy)-essigsäure-[1-methyl-2-(4-methylphenoxy)-äthyl]-ester enthält.

6. Mittel gemäss Patentanspruch 1, dadurch gekennzeichnet, dass es als Herbizid N-Benzoyl-N-(3-chlor-5-fluorphenyl)-DL-alanin und als Gegenmittel 2-(5-Chinolin-8-yloxy)-essigsäure-n-pentylester enthält.

7. Verfahren zum selektiven Bekämpfen von Unkräutern und Gräsern in Nutzpflanzenkulturen, dadurch gekennzeichnet, dass man die Kulturen, deren Saatgut oder deren Anbaufläche gleichzeitig oder unabhängig voneinander mit einer wirksamen Menge eines Herbizides der Formel I gemäss Anspruch 1 und einer herbizid-antagonistisch wirksamen Menge eines Chinolin-Derivates der Formel II gemäss Anspruch 1 behandelt.

8. Verfahren gemäss Patentanspruch 7 zum selektiven Bekämpfen von Unkräutern und Gräsern in Nutzpflanzenkulturen, dadurch gekennzeichnet, dass man die Kulturen, deren Saatgut oder deren Anbaufläche gleichzeitig oder unabhängig voneinander mit einer wirksamen Menge eines Herbizides der Formel I gemäss Anspruch 1 und einer herbizid-antagonistisch wirksamen Menge eines Chinolin-Derivates ausgewählt aus Anspruch 5, behandelt.

9. Verfahren gemäss Patentanspruch 7 zum selektiven Bekämpfen von Unkräutern und Gräsern in Nutzpflanzenkulturen, dadurch gekennzeichnet, dass man die Kulturen, deren Saatgut oder deren Anbaufläche gleichzeitig oder unabhängig voneinander mit einer herbizid-wirksamen Menge N-Benzoyl-N-(3-chlor-4-fluorphenyl-DL-alanin und einer herbizid-antagonistisch wirksamen Menge eines Chinolinderivates der Formel II behandelt.

10. Verfahren gemäss Patentanspruch 7, dadurch gekennzeichnet, dass man Kulturpflanzenbestände oder Anbauflächen für Kulturpflanzen mit 0,25-2 kg/ha einer Verbindung der Formel I gemäss Anspruch 1 und einer Menge von 0,01 bis 0,5 g/ha einer Verbindung der Formel II gemäss Anspruch 1 behandelt.

11. Verfahren gemäss Patentanspruch 7, dadurch gekennzeichnet, dass man Samen der Kulturpflanze mit 0,01 bis 10 g/kg Samen einer Verbindung der Formel II gemäss Anspruch 1 behandelt.

## Claims

1. A composition for the selective control of weeds in crops of useful plants, which comprises as active ingredient a mixture comprising

a) a herbicidally effective amount of an N-benzoyl-N-phenylalanine derivative of formula I

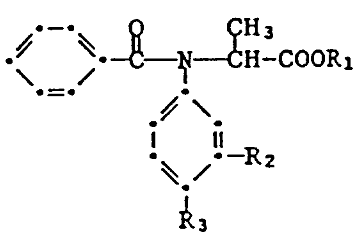

(I)

wherein
$R_1$ is hydrogen or $C_1$-$C_4$alkyl and
each of $R_2$ and $R_3$, independently of the other, is chlorine or fluorine, or an enantiomer of such a compound, and

b) as safener, a herbicide-antagonistically effective amount of a quinoline derivative of formula II

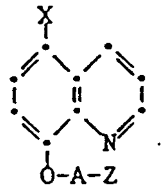

(II)

wherein X is hydrogen or halogen,
A is one of the groups $-CH_2-$, $-CH_2-CH_2-$ and $-CH(CH_3)-$ and
Z is cyano or amidoxime which may be acylated at the oxygen atom, a carboxy group or a salt thereof, a mercaptocarbonyl group or a salt thereof, a carboxylic acid ester group, a carboxylic acid thiol ester group, an unsubstituted or substituted carboxylic acid amide group, a cyclised, unsubstituted or substituted derivative of a carboxylic acid amide group or a carboxylic acid hydrazide group, or
A and Z together are an unsubstituted or substituted tetrahydrofuran-2-one ring, including the acid addition salts and metal complexes thereof,
together with inert carriers and adjuvants.

**2.** A composition according to patent claim 1, which comprises as herbicide a compound selected from
N-benzoyl-N-(3-chloro-4-fluorophenyl)-DL-alanine,
N-benzoyl-N-(3-chloro-4-fluorophenyl)-DL-alanine methyl ester,
N-benzoyl-N-(3-chloro-4-fluorophenyl)-DL-alanine ethyl ester,
N-benzoyl-N-(3-chloro-4-fluorophenyl)-D-alanine,
N-benzoyl-N-(3-chloro-4-fluorophenyl)-D-alanine methyl ester,
N-benzoyl-N-(3-chloro-4-fluorophenyl)-D-alanine isopropyl ester,
N-benzoyl-N-(3-chloro-4-fluorophenyl)-L-alanine and
N-benzoyl-N-(3-chloro-4-fluorophenyl)-L-alanine methyl ester.

**3.** A composition according to patent claim 1, which comprises as herbicide N-benzoyl-N-(3-chloro-4-fluorophenyl)-DL-alanine methyl ester.

**4.** A composition according to patent claim 1, which comprises as herbicide the (R) enantiomer of N-benzoyl-N-(3-chloro-4-fluorophenyl)-D-alanine.

**5.** A composition according to patent claim 1, which comprises as safener a quinoline derivative selected from
2-quinolin-8-yloxy-acetic acid isopropyl ester,
2-(5-chloroquinolin-8-yloxy)-acetic acid n-dodecyl ester,
2-(5-chloroquinolin-8-yloxy)-acetic acid n-butyl ester,
2-(5-chloroquinolin-8-yloxy)-acetic acid n-octyl ester,
2-quinolin-8-yloxy-acetic acid sec-butyl ester,
2-(5-chloroquinolin-8-yloxy)-thioacetic acid n-octyl ester,
2-(5-chloroquinolin-8-yloxy)-acetic acid (2-butenyl)-ester,
2-(5-chloroquinolin-8-yloxy)-acetic acid methallyl ester,
2-(5-chloroquinolin-8-yloxy)-acetic acid (2-isopropyloxyethyl)-ester,
2-(5-chloroquinolin-8-yloxy)-acetic acid (2-phenoxyethyl)-ester,
2-(5-chloroquinolin-8-yloxy)-acetic acid (1-methylbutyl)-ester,
2-(5-chloroquinolin-8-yloxy)-acetic acid cyclohexyl ester,
2-(5-chloroquinolin-8-yloxy)-acetic acid sec-butyl ester,
2-(5-chloroquinolin-8-yloxy)-acetic acid (2-methylpentyl)-ester,
2-(5-chloroquinolin-8-yloxy)-thioacetic acid n-butyl ester,
2-(5-chloroquinolin-8-yloxy)-acetic acid (3,6-dioxadecyl)-ester,
2-(5-chloroquinolin-8-yloxy)-acetic acid (3-methoxybutyl)-ester,
2-(5-chloroquinolin-8-yloxy)-acetic acid (1-ethylbutyl)-ester,
2-(5-chloroquinolin-8-yloxy)-acetic acid (2-ethylbutyl)-ester,
2-(5-chloroquinolin-8-yloxy)-acetic acid (1-methylisopentyl)-ester,

2-(5-chloroquinolin-8-yloxy)-acetic acid n-undecyl ester,
2-(5-chloroquinolin-8-yloxy)-acetic acid (2-methylbutyl)-ester,
2-(5-chloroquinolin-8-yloxy)-thioacetic acid sec-butyl ester,
2-(5-chloroquinolin-8-yloxy)-acetic acid (3,6-dioxaheptyl)-ester,
2-(5-chloroquinolin-8-yloxy)-acetic acid n-heptyl ester,
2-(5-chloroquinolin-8-yloxy)-thioacetic acid n-dodecyl ester,
2-(5-chloroquinolin-8-yloxy)-thioacetic acid n-decyl ester,
2-(5-chloroquinolin-8-yloxy)-acetic acid (1-propylpropargyl)-ester,
2-(5-chloroquinolin-8-yloxy)-acetic acid (1-methylisobutyl)-ester,
2-(5-chloroquinolin-8-yloxy)-thioacetic acid tert-butyl ester,
2-(5-chloroquinolin-8-yloxy)-acetic acid neopentyl ester,
2-(5-chloroquinolin-8-yloxy)-thioacetic acid n-propyl ester,
2-(5-chloroquinolin-8-yloxy)-acetic acid (1-methylhexyl)-ester,
2-(5-chloroquinolin-8-yloxy)-thioacetic acid ethyl ester,
2-(5-chloroquinolin-8-yloxy)-acetic acid (2-ethylhexyl)-ester,
2-(5-chloroquinolin-8-yloxy)-thioacetic acid isobutyl ester,
2-quinolin-8-yloxy-thioacetic acid n-decyl ester,
2-(5-chloroquinolin-8-yloxy)-acetic acid isopentyl ester,
2-(5-chloroquinolin-8-yloxy)-acetic acid (1-ethylpentyl)-ester,
2-(5-chloroquinolin-8-yloxy)-acetic acid (1-propylbutyl)-ester,
2-(5-chloroquinolin-8-yloxy)-thioacetic acid n-hexyl ester,
2-(5-chloroquinolin-8-yloxy)-acetic acid n-hexyl ester,
2-(5-chloroquinolin-8-yloxy)-thioacetic acid isopropyl ester,
2-(5-chloroquinolin-8-yloxy)-acetic acid (1-pentylallyl)-ester,
2-(5-chloroquinolin-8-yloxy)-acetic acid (1-methylpentyl)-ester,
2-(5-chloroquinolin-8-yloxy)-acetic acid (1,1-dimethylpropargyl)-ester,
2-(5-chloroquinolin-8-yloxy)-acetic acid (1-ethyl-1-methylpropargyl)-ester,
2-(5-chloroquinolin-8-yloxy)-acetic acid n-butoxycarbonylmethyl ester,
2-(5-chloroquinolin-8-yloxy)-acetic acid (1-n-butoxycarbonylethyl)-ester,
2-(5-chloroquinolin-8-yloxy)-acetic acid (1-methylisohexyl)-ester,
2-(5-chloroquinolin-8-yloxy)-acetic acid (1-phenylisobutyl)-ester,
2-(5-chloroquinolin-8-yloxy)-acetic acid [1-methyl-2-(2-methylphenoxy)-ethyl]-ester,
2-(5-chloroquinolin-8-yloxy)-acetic acid (1-phenylethyl)-ester,
2-(5-chloroquinolin-8-yloxy)-acetic acid [1-methyl-2-(4-ethylphenoxy)-ethyl]-ester,
2-(5-chloroquinolin-8-yloxy)-acetic acid (1-methyl-2-phenylethyl)-ester,
2-(5-chloroquinolin-8-yloxy)-acetic acid [1-methyl-2-(2-isopropylphenoxy)-ethyl]-ester,
2-(5-chloroquinolin-8-yloxy)-acetic acid (1-phenylpropyl)-ester,
2-(5-chloroquinolin-8-yloxy)-acetic acid [1-methyl-2-(2-ethylphenoxy)-ethyl]-ester,
2-(5-chloroquinolin-8-yloxy)-acetic acid [1-methyl-2-(3-ethylphenoxy)-ethyl]-ester,
2-(5-chloroquinolin-8-yloxy)-acetic acid (1-methyl-2-phenoxyethyl)-ester,
2-(5-chloroquinolin-8-yloxy)-acetic acid (1-methyl-3-phenylpropyl)-ester,
2-(5-chloroquinolin-8-yloxy)-acetic acid [1-methyl-2-(3-methylphenoxy)-ethyl]-ester,
2-(5-chloroquinolin-8-yloxy)-acetic acid [1-methyl-2-(4-isopropylphenoxy)-ethyl]-ester and
2-(5-chloroquinolin-8-yloxy)-acetic acid [1-methyl-2-(4-methylphenoxy)-ethyl]-ester.

**6.** A composition according to patent claim 1, which comprises as herbicide N-benzoyl-N-(3-chloro-5-fluorophenyl)-DL-alanine and as safener 2-(5-quinolin-8-yloxy)-acetic acid n-pentyl ester.

**7.** A method for the selective control of weeds and grasses in crops of useful plants, which comprises treating the crops, the seeds thereof or the cultivation area thereof with an effective amount of a herbicide of formula I according to claim 1 and a herbicide-antagonistically effective amount of a quinoline derivative of formula II according to claim 1, simultaneously or independently of each other.

**8.** A method according to patent claim 7 for the selective control of weeds and grasses in crops of useful plants, which comprises treating the crops, the seeds thereof or the cultivation area thereof with an effective amount of a herbicide of formula I according to claim 1 and a herbicide-antagonistically effective amount of a quinoline derivative selected from claim 5, simultaneously or independently of each other.

**9.** A method according to patent claim 7 for the selective control of weeds and grasses in crops of useful plants, which comprises treating the crops, the seeds thereof or the cultivation area thereof with a herbicidally effective amount of N-benzoyl-N-(3-chloro-4-fluorophenyl)-DL-alanine and a herbicide-antagonistically effective amount of a quinoline derivative of formula II, simultaneously or independently of each other.

**10.** A method according to patent claim 7, which comprises treating crops of cultivated plants or cultivation areas for cultivated plants with 0.25 to 2 kg/ha of a compound of formula I according to claim 1 and an amount of 0.01 to 0.5 g/ha of a compound of formula II according to claim 1.

**11.** A method according to patent claim 7, which comprises treating seeds of the cultivated plant with 0.01 to 10 g/kg seeds of a compound of formula II according to claim 1.

**Revendications**

**1.** Produit pour la lutte sélective contre les végétaux adventices dans les cultures de végétaux utiles, caractérisé en ce qu'il contient en tant que substance active, avec des véhicules et additifs inertes, un mélange consistant en

a) une quantité herbicide efficace d'un dérivé de N-benzoyl-N-phénylalanine de formule I

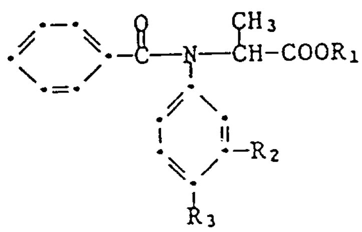

(I)

dans laquelle
$R_1$ représente l'hydrogène ou un groupe alkyle en C1-C4 et $R_2$ et $R_3$ représentent chacun, indépendamment l'un de l'autre, le chlore ou le fluor, ou d'un énantiomère d'un tel composé, et

b) en tant qu'antidote et en quantité antagoniste efficace à l'égard de l'herbicide, un dérivé de quinoléine de formule II

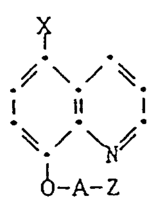

(II)

dans laquelle X représente l'hydrogène ou un halogène, A représente l'un des groupes $-CH_2-$, $-CH_2-CH_2-$ ou $-CH(CH_3)$ et
Z représente un groupe cyano ou amidoxime qui peut être acylé sur l'atome d'oxygène, un groupe carboxyle éventuellement à l'état de sel, un groupe mercaptocarbonyle éventuellement à l'état de sel, un groupe ester d'acide carboxylique, un groupe thiolester d'acide carboxylique, un groupe carboxamide substitué ou non, un dérivé cyclisé, substitué ou non, d'un groupe carboxamide, ou un groupe carbohydrazide, ou bien
A et Z forment ensemble un cycle tétrahydrofuranne-2-one substitué ou non, y compris ses sels formés par addition avec des acides et complexes métalliques.

**2.** Produit selon revendication 1, caractérisé en ce qu'il contient en tant qu'herbicide un composé choisi parmi les suivants :
N-benzoyl-N-(3-chloro-4-fluorophényl)-DL-alanine,
N-benzoyl-N-(3-chloro-4-fluorophényl)-DL-alaninate de méthyle,
N-benzoyl-N-(3-chloro-4-fluorophényl)-DL-alaninate d'éthyle,

N-benzoyl-N-(3-chloro-4-fluorophényl)-D-alanine,
N-benzoyl-N-(3-chloro-4-fluorophényl)-D-alaninate de méthyle,
N-benzoyl-N-(3-chloro-4-fluorophényl)-D-alaninate d'isopropyle,
N-benzoyl-N-(3-chloro-4-fluorophényl)-L-alanine,
N-benzoyl-N-(3-chloro-4-fluorophényl)-L-alaninate de méthyle.

**3.** Produit selon revendication 1, caractérisé en ce qu'il contient en tant qu'herbicide le N-benzoyl-N-(3-chloro-4-fluorophényl)-DL-alaninate de méthyle.

**4.** Produit selon revendication 1, caractérisé en ce qu'il contient en tant qu'herbicide l'énantiomère (R) de l'acide N-benzoyl-N-(3-chloro-4-fluorophényl)-D-alaninique.

**5.** Produit selon revendication 1, caractérisé en ce qu'il contient en tant qu'antidote un dérivé de la quinoléine choisi parmi les suivants :
2-quinoléine-8-yloxyacétate d'isopropyle,
2-(5-chloroquinoléine-8-yloxy)-acétate de n-dodécyle,
2-(5-chloroquinoléine-8-yloxy)-acétate de n-butyle,
2-(5-chloroquinoléine-8-yloxy)-acétate de n-octyle,
2-quinoléine-8-yloxy-acétate de sec-butyle,
2-(5-chloroquinoléine-8-yloxy)-thioacétae de n-octyle,
2-(5-chloroquinoléine-8-yloxy)-acétate de 2-buténylе,
2-(5-chloroquinoléine-8-yloxy)-acétate de méthallyle,
2-(5-chloroquinoléine-8-yloxy)-acétate de 2-isopropyloxyéthyle,
2-(5-chloroquinoléine-8-yloxy)-acétate de 2-phénoxyéthyle,
2-(5-chloroquinoléine-8-yloxy)-acétate de 1-méthylbutyle,
2-(5-chloroquinoléine-8-yloxy)-acétate de cyclohexyle,
2-(5-chloroquinoléine-8-yloxy)-acétate de sec-butyle,
2-(5-chloroquinoléine-8-yloxy)-acétate de 2-méthylpentyle,
2-(5-chloroquinoléine-8-yloxy)-thioacétate de n-butyle,
2-(5-chloroquinoléine-8-yloxy)-acétate de 3,6-dioxadécyle,
2-(5-chloroquinoléine-8-yloxy)-acétate de 3-méthoxybutyle,
2-(5-chloroquinoléine-8-yloxy)-acétate de 1-éthylbutyle,
2-(5-chloroquinoléine-8-yloxy)-acétate de 2-éthylbutyle,
2-(5-chloroquinoléine-8-yloxy)-acétate de 1-méthylisopentyle,
2-(5-chloroquinoléine-8-yloxy)-acétate de n-indécyle,
2-(5-chloroquinoléine-8-yloxy)-acétate de 2-méthylbutyle,
2-(5-chloroquinoléine-8-yloxy)-thioacétate de s-butyle,
2-(5-chloroquinoléine-8-yloxy)-acétate de 3,6-dioxaheptyle,
2-(5-chloroquinoléine-8-yloxy)-acétate de n-heptyle,
2-(5-chloroquinoléine-8-yloxy)-thioacétate de n-dodécyle,
2-(5-chloroquinoléine-8-yloxy)-thioacétate de n-décyle,
2-(5-chloroquinoléine-8-yloxy)-acétate de 1-propylpropargyle,
2-(5-chloroquinoléine-8-yloxy)-acétate de 1-méthylisobutyle,
2-(5-chloroquinoléine-8-yloxy)-thioacétate de tert-butyle,
2-(5-chloroquinoléine-8-yloxy)-acétate de néopentyle,
2-(5-chloroquinoléine-8-yloxy)-thioacétate de n-propyle,
2-(5-chloroquinoléine-8-yloxy)-acétate de 1-méthylhexyle,
2-(5-chloroquinoléine-8-yloxy)-thioacétate d'éthyle,
2-(5-chloroquinoléine-8-yloxy)-acétate de 2-éthylhexyle,
2-(5-chloroquinoléine-8-yloxy)-thioacétate de i-butyle,
2-quinoléine-8-yloxy-thioacétate de n-décyle,
2-(5-chloroquinoléine-8-yloxy)-acétate de i-pentyle,
2-(5-chloroquinoléine-8-yloxy)-acétate de 1-éthylpentyle,
2-(5-chloroquinoléine-8-yloxy)-acétate de 1-propylbutyle,
2-(5-chloroquinoléine-8-yloxy)-thioacétate de n-hexyle,
2-(5-chloroquinoléine-8-yloxy)-acétate de n-hexyle,
2-(5-chloroquinoléine-8-yloxy)-thioacétate de i-propyle,
2-(5-chloroquinoléine-8-yloxy)-acétate de 1-pentylallyle,

2-(5-chloroquinoléine-8-yloxy)-acétate de 1-méthylpentyle,
2-(5-chloroquinoléine-8-yloxy)-acétate de 1,1-diméthylpropargyle,
2-(5-chloroquinoléine-8-yloxy)-acétate de 1-éthyl-1-méthylpropargyle,
2-(5-chloroquinoléine-8-yloxy)-acétate de n-butyloxycarbonylméthyle,
2-(5-chloroquinoléine-8-yloxy)-acétate de 1-n-butyloxycarbonyléthyle,
2-(5-chloroquinoléine-8-yloxy)-acétate de 1-méthylisohexyle,
2-(5-chloroquinoléine-8-yloxy)-acétate de 1-phénylisobutyle,
2-(5-chloroquinoléine-8-yloxy)-acétate de 1-méthyl-2-(2-méthylphénoxy)éthyle,
2-(5-chloroquinoléine-8-yloxy)-acétate de 1-phényléthyle,
2-(5-chloroquinoléine-8-yloxy)-acétate de 1-méthyl-2-(4-éthylphénoxy)éthyle,
2-(5-chloroquinoléine-8-yloxy)-acétate de 1-méthyl-2-phényléthyle,
2-(5-chloroquinoléine-8-yloxy)-acétate de 1-méthyl-2-(2-isopropylphénoxy)éthyle,
2-(5-chloroquinoléine-8-yloxy)-acétate de 1-phénylpropyle,
2-(5-chloroquinoléine-8-yloxy)-acétate de 1-méthyl-2-(2-éthylphénoxy)éthyle,
2-(5-chloroquinoléine-8-yloxy)-acétate de 1-méthyl-2-(3-éthylphénoxy)éthyle,
2-(5-chloroquinoléine-8-yloxy)-acétate de 1-méthyl-2-phénoxyéthyle,
2-(5-chloroquinoléine-8-yloxy)-acétate de 1-méthyl-3-phénylpropyle,
2-(5-chloroquinoléine-8-yloxy)-acétate de 1-méthyl-2-(3-méthylphénoxy)éthyle,
2-(5-chloroquinoléine-8-yloxy)-acétate de 1-méthyl-2-(4-isopropylphénoxy)éthyle ou
2-(5-chloroquinoléine-8-yloxy)-acétate de 1-méthyl-2-(4-méthylphénoxy)éthyle.

**6.** Produit selon revendication 1, caractérisé en ce qu'il contient en tant qu'herbicide la N-benzoyl-N-(3-chloro-5-fluorophényl)-DL-alanine et en tant qu'antidote le 2-(5-quinoléine-8-yloxy)-acétate de n-pentyle.

**7.** Procédé pour combattre sélectivement les végétaux adventices et les graminées dans les cultures de végétaux utiles, caractérisé en ce que l'on traite les cultures, leurs semences ou la surface de culture, simultanément ou indépendamment, par une quantité efficace d'un herbicide de formule I de la revendication 1 et une quantité antagoniste efficace à l'égard de l'herbicide d'un dérivé de quinoléine de formule II de la revendication 1.

**8.** Procédé selon revendication 7 pour combattre sélectivement les végétaux adventices et les graminées dans les cultures de végétaux utiles, caractérisé en ce que l'on traite les cultures, les semences ou l'aire de culture, simultanément ou indépendamment, par une quantité efficace d'un herbicide de formule I de la revendication 1 et une quantité antagoniste efficace à l'égard de l'herbicide d'un dérivé de quinoléine choisi parmi ceux de la revendication 5.

**9.** Procédé selon revendication 7 pour combattre sélectivement les végétaux adventices et les graminées dans les cultures de végétaux utiles, caractérisé en ce que l'on traite les cultures, les semences ou l'aire de culture, simultanément ou indépendamment, par une quantité herbicide efficace de N-benzoyl-N-(3-chloro-4-fluorophényl)-DL-alanine et une quantité antagoniste efficace à l'égard de l'herbicide d'un dérivé de quinoléine de formule II.

**10.** Procédé selon revendication 7, caractérisé en ce que l'on traite la culture ou l'aire de culture des végétaux utiles par 0,25 à 2 kg/ha d'un composé de formule I de la revendication 1 et une quantité de 0,01 à 0,5 g/ha d'un composé de formule II selon revendication 1.

**11.** Procédé selon revendication 7, caractérisé en ce que l'on traite les semences de la plante cultivée par 0,01 à 10 g/kg de semences d'un composé de formule II de la revendication 1.